# EUROPÄISCHE PATENTSCHRIFT

(11) **EP 3 974 602 B1**
(45) Veröffentlichungstag und Bekanntmachung des Hinweises auf die Patenterteilung: **18.06.2025**
(21) Anmeldenummer: 21196839.1
(22) Anmeldetag: 15.09.2021
(51) Int. Cl.: E04H 12/08

(54) **KOPPLUNGSVORRICHTUNG ZUM KOPPELN VON TURMSEGMENTEN EINES TURMS EINER WINDENERGIEANLAGE UND MONTAGEVERFAHREN HIERFÜR**
COUPLING DEVICE FOR COUPLING TOWER SEGMENTS OF A TOWER OF A WIND TURBINE AND ASSEMBLY METHOD THERFORE
DISPOSITIF D'ACCOUPLEMENT PERMETTANT D'ACCOUPLER DES SEGMENTS D'UNE TOUR D'UNE ÉOLIENNE ET PROCÉDÉ DE MONTAGE POUR CELA

(30) Priorität: 24.09.2020 DE 102020124912
(43) Veröffentlichungstag der Anmeldung: 30.03.2022
(73) Patentinhaber: Wobben Properties GmbH, 26607 Aurich (DE)
(72) Erfinder: Lütkemeyer, Stefan, 26605 Aurich (DE); Knoop, Frank, 26607 Aurich (DE); Coordes, Ihno, 26632 Ihlow (DE); Smit, Jan-Ulfert, 52224 Stolberg (DE); Lange, Ronald, 04275 Leipzig (DE)
(74) Vertreter: Eisenführ Speiser

(56) Entgegenhaltungen:
- EP-A1- 1 889 987
- EP-A1- 2 375 057
- WO-A1-2011/147478
- US-B1- 6 957 518

## Beschreibung

Die Erfindung betrifft eine Kopplungsvorrichtung gemäß Anspruch 1 zum Koppeln von aneinander angeordneten Turmsegmenten eines rohrförmigen Turms einer Windenergieanlage. Ferner betrifft die Erfindung ein Turmsegment, einen Teil eines Turms einer Windenergieanlage, einen Turm einer Windenergieanlage sowie eine Windenergieanlage. Die Erfindung betrifft ferner ein Verfahren zur Montage von aneinander angeordneten Turmsegmenten eines rohrförmigen Turms einer Windenergieanlage.

Türme von Windenergieanlagen sind in der Regel schlanke Bauwerke mit einer großen Höhe, die insbesondere orthogonal zu dieser Höhe eine vergleichsweise geringe Erstreckung aufweisen. Die Türme sind häufig rohrförmig als Stahlturm, als Betonturm, umfassend oder bestehend aus Stahlbeton und/oder Spannbeton, oder als Hybridturm, umfassend einen Betonturmabschnitt und ein Stahlturmabschnitt, ausgebildet. Oftmals sind diese rohrförmigen Türme in vertikaler Richtung und/oder in horizontaler Umfangsrichtung segmentiert, sodass die rohrförmigen Türme zwei oder mehr Turmsegmente umfassen. Eine derartige Segmentierung der rohrförmigen Türme ist insbesondere erforderlich, um die Türme bzw. die Turmsegmente von einer Produktionsstätte zu dem Aufstellungsort der Windenergieanlage transportieren zu können.

Die Türme sind im Betrieb hohen mechanischen Belastungen ausgesetzt. Daher ist es erforderlich, dass die Turmsegmente sicher aneinander fixiert sind und die Verbindungen eine hohe Zuverlässigkeit und/oder Tragfähigkeit gewährleisten. Es ist insbesondere bekannt, die Turmsegmente üblicherweise mittels horizontaler und/oder vertikaler Verbindungsflansche zu verbinden. Die horizontalen Verbindungsflansche sind dafür eingerichtet, vertikal benachbarte Turmsegmente miteinander zu verbinden. Die horizontalen Verbindungsflansche sind hingegen eingerichtet, um horizontal benachbarte Turmsegmente miteinander zu verbinden. Die Herstellung und der Transport von Verbindungsflanschen sind jedoch in der Regel aufwendig und teuer. Auch die Montage derartiger Verbindungsflansche ist mit einem hohen Zeit- und Personalaufwand verbunden, sodass der Aufbau des Turms der Windenergieanlage insgesamt langwierig und kostenintensiv ist.

Beispielsweise ist es auch bekannt, aneinander angeordneter Turmsegmente durch überlappende Platten miteinander zu verbinden. Hierzu werden die Platten in der Regel mit den Turmsegmenten verschraubt. Zur Herstellung der Verschraubung ist es notwendig, dass Schrauben von einer Seite der Turmsegmente gesteckt und von einer gegenüberliegenden Seite der Turmsegmente mit einer Mutter verschraubt werden. Hierzu wird ein Fahrkorb benötigt, der an einem obersten Turmsegment angebracht und zu der Verschraubung heruntergefahren wird. Daher sind die Montage und gegebenenfalls die nachfolgende Kontrolle der Verschraubungen derart zeitaufwendig, dass der Aufbau des Turms der Windenergieanlage und somit auch der gesamten Windenergieanlage zeit- und kostenintensiv ist. Zusätzlich zu einer Reduzierung des Arbeitsaufwandes ist es wünschenswert eine Verbesserung der Arbeitssicherheit zu erzielen.

Es ist auch bekannt, eine überlappende Platte mit aneinander angeordneten Turmsegmenten zu verbinden durch Einpressen von Einpressmuttern in Bohrungen der Turmsegmente oder einer weiteren überlappenden Platte und Verschrauben dieser Einpressmuttern mit Schrauben, die durch Bohrungen der überlappenden Platte hindurchgeführt sind. Derartige Einpressmuttern sind insbesondere dahingehend nachteilig, dass Toleranzen, insbesondere Bohrungstoleranzen, weder ausgeglichen noch genutzt werden können.

EP 1 889 987 A1 offenbart eine rohrförmige Stützstruktur aufweisend mehrere rohrförmige Abschnitte und mehrere flanschlose Verbindungsstellen für einen Windturbinenturm. US 6,957,518 B1 offenbart eine Zwei-Platten-Verbindungsbaugruppe zum Verbinden des unteren Endes eines oberen rohrförmigen Mastelementes mit dem oberen Ende eines unteren rohrförmigen Elementes, die die Notwendigkeit beseitigt, eine Person an der Außenseite des rohrförmigen Mastelementes und eine Person an der Innenseite des rohrförmigen Mastelementes zu haben, wenn die Verbindungsplatten aneinander befestigt werden. EP 2 375 057 A1 offenbart eine Windturbinenanlage mit einem Windturbinenturm oder -turmabschnitt, einem Aufnahmeteil einer Windturbinenfundamentanlage, einem Verbindungsmittel, das sich zum Verbinden des Windturbinenturms oder -turmabschnitts mit dem Aufnahmeteil eignet, wobei ein unteres Ende des Windturbinenturms oder - turmabschnitts flanschlos ist. WO 2011/147478 A1 offenbart eine Eckverbindung, insbesondere für einen Windturbinenturm, die vier benachbarte Turmsegmente durch in einer horizontalen oder vertikalen Richtung nach innen gebogene Abschnitte verbindet, wobei die Längen der nach innen gebogenen Abschnitte in horizontaler oder vertikaler Richtung abwechseln und zwei nach innen gebogene Abschnitte in horizontaler oder vertikaler Richtung einen Stumpfstoß bilden, und wobei mindestens ein Stoßblech mit dem Stumpfstoß verbunden ist.

Die existierenden Vorrichtungen zur Verbindung aneinander angeordneter Turmsegmente bieten verschiedene Vorteile, jedoch sind weitere Verbesserungen wünschenswert.

Das Deutsche Patent- und Markenamt hat in der Prioritätsanmeldung zur vorliegenden Anmeldung folgenden Stand der Technik recherchiert: DE 10 2014 112 787 A1, US 2008 / 0 041 009 A1, US 2010/0 071 275 A1.

Es ist daher eine Aufgabe, eine Kopplungsvorrichtung zum Koppeln von aneinander angeordneten Turmsegmenten eines rohrförmigen Turms einer Windenergieanlage, ein Turmsegment, einen Teil eines Turms einer Windenergieanlage, einen Turm einer Windenergieanlage sowie eine Windenergieanlage und ein Verfahren zur Montage von aneinander angeordneten Turmsegmenten eines rohrförmigen Turms einer Windenergieanlage bereitzustellen, die einen oder mehrere der genannten Nachteile existierender Lösungen vermindern oder beseitigen. Es ist insbesondere eine Aufgabe, eine Lösung bereitzustellen, die die Zuverlässigkeit und/oder die Tragfähigkeit der Verbindung weiter steigert und gleichzeitig eine Reduktion des Montageaufwands, insbesondere ohne ein Verhindern der Nutzung von Toleranzen, bewirkt.

Diese Aufgabe wird gelöst durch eine Kopplungsvorrichtung gemäß Anspruch 1 zum Koppeln von aneinander angeordneten Turmsegmenten eines rohrförmigen Turms einer Windenergieanlage.

In der hier beschriebenen Lösung wird die Koppelplatte bereitgestellt, die in einem Einbauzustand derart an einer Umfangsfläche der aneinander angeordneten Turmsegmente angeordnet werden kann, dass diese einen Stoß überlappt. Die Anordnung der Aufnahmeplatte mit dem mindestens einen Aufnahmeelement als eine Verdrehsicherung ermöglicht, dass ein Gewindeelement von einer Seite der Koppelplatte in die Durchgangsöffnung eingeführt und an einer gegenüberliegenden Seite mit einem in dem Aufnahmeelement aufnehmbaren Gegenelement verschraubt werden kann. Durch die Anordnung der Koppelplatte an dem Stoßbereich können die aneinander angeordneten Turmsegmente im Einbauzustand, insbesondere mittels Verschraubungen, mechanisch miteinander verbunden werden.

Durch eine derartige Kopplungsvorrichtung kann eine sichere und zuverlässige Verbindung von aneinander angeordneten Turmsegmenten gewährleistet werden. Die zusätzliche, an der Außenfläche des Verbindungsabschnitts angeordnete Aufnahmeplatte ermöglicht eine Montage, insbesondere ein Einführen eines Gewindeelements und ein Verschrauben des Gewindeelements mit einem Gegenelement, von einer Seite der Turmsegmente. Dadurch entfällt die Notwendigkeit bei einem Turmaufbau, einen Fahrkorb an einem oberen Ende der Turmsegmente anzuordnen, um auf die Höhe des Stoßes herab fahren zu können.

Insbesondere kann die Koppelplatte an den Umfangsflächen der aneinander angeordneten Turmsegmente angeordnet werden, die im Einbauzustand eine Außenumfangsfläche, insbesondere einen Teil der Außenumfangsfläche, des Turms bilden. Insbesondere zur Montage der Turmsegmente können Podeste an der Seite der gegenüberliegenden Umfangsfläche, insbesondere der Innenumfangsfläche, angeordnet sein. Dadurch kann gewährleistet werden, dass der Stoßbereich für ein Personal leicht zugänglich ist, um von dieser Seite, also insbesondere der Innenseite, ein Einführen und Durchführen des Gewindeelements in die Durchgangsöffnungen, insbesondere des zweiten Turmsegments und der Koppelplatte, und ein Verschrauben des Gewindeelements mit einem in dem Aufnahmeelement aufnehmbaren Gegenelements von dieser Seite zu ermöglichen.

Derartige Kopplungsvorrichtungen sind insbesondere dahingehend vorteilhaft, dass eine wesentlich verkürzte Montagezeit und gleichzeitig eine Erhöhung der Arbeitssicherheit gewährleistet werden kann. Ein segmentierter Turm kann mit derartigen Kopplungsvorrichtungen zum Koppeln der aneinander angeordneten Turmsegmente insgesamt deutlich kostengünstiger und/oder einfacher und/oder schneller hergestellt werden, als mit bekannten Verbindungsvorrichtungen. Mithin können der Personalaufwand und/oder der Zeitaufwand reduziert und/oder Kosten eingespart werden. Insbesondere können die Baustellenaktivitäten zur Montage der Turmsegmente und somit auch zum Aufbau des Turms deutlich reduziert werden.

Die hier beschriebenen Lösung beruht unter anderem auf der Erkenntnis, dass selbst wenn durch die zusätzlich angebrachte Aufnahmeplatte ein Gewicht der Kopplungsvorrichtung im Vergleich zu einer einfachen überlappenden Platte erhöht wird, vorstehend genannte Vorteile überwiegen und die Wirtschaftlichkeit erhöhen.

Die Kopplungsvorrichtung ist nicht auf den Einsatz bei rohrförmigen Türmen, insbesondere Windenergieanlagentürmen, beschränkt, auch wenn sie hier besonders vorteilhaft und auf wirtschaftliche Art und Weise eingesetzt werden kann. Vielmehr kann die Kopplungsvorrichtung auch bei segmentierten Bauwerken anderer Art und/oder bei segmentierten Türmen anderer Art und/oder anderen segmentierten Elementen eingesetzt werden, um einzelne Segmente, insbesondere vertikal und/oder horizontal benachbarte Segmente, zu verbinden.

Die erste Anlagefläche kann vorzugsweise eine Form aufweisen, die einem Segment einer Umfangsfläche des Turms entspricht. Vorzugsweise entspricht die Form der ersten Anlagefläche somit im Wesentlichen einer Geometrie eines Teils der Umfangsfläche des ersten Turmsegments. Entsprechend kann die zweite Anlagefläche vorzugsweise eine Form aufweisen, die einem Segment einer Umfangsfläche des Turms entspricht. Insbesondere entspricht demnach die Form der zweiten Anlagefläche im Wesentlichen einer Geometrie eines Teils der Umfangsfläche des zweiten Turmsegments. Sofern das erste Turmsegment und/oder das zweite Turmsegment beispielsweise im Wesentlichen rohrförmig und/oder hohlzylinderförmig oder als ein Teil eines Rohrs und/oder als ein Teil eines Zylinders ausgebildet sind, weisen die erste Anlagefläche und/oder die zweite Anlagefläche somit vorzugsweise eine Form eines Mantelsegments eines Zylinders oder eines Teils eines Mantelsegments eines Zylinders auf. Sofern das erste Turmsegment und/oder das zweite Turmsegment beispielsweise im Wesentlichen kegelstumpfförmig oder als ein Teil eines Kegelstumpfs ausgebildet sind, weisen die erste Anlagefläche und/oder die zweite Anlagefläche somit vorzugsweise eine Form eines Mantelsegments eines Kegels, insbesondere eines Kegelstumpfs, oder eines Teils eines Mantelsegments eines Kegels, insbesondere eines Kegelstumpfs, auf. Sofern das erste Turmsegment und/oder das zweite Turmsegment beispielsweise polygonförmig oder als ein Teil eines Polygons ausgebildet ist, weisen die erste Anlagefläche und/oder die zweite Anlagefläche somit vorzugsweise eine ebene flächige Erstreckung auf, die einer Umfangsfläche einer der Seiten des polygonförmigen Turmsegments oder des Turmsegments als ein Teil eines Polygons entspricht.

Die Form der ersten Anlagefläche und/oder der zweiten Anlagefläche als Segment der Umfangsfläche des Turms kann sich insbesondere auf ein Segment in Umfangsrichtung des Turms beziehen. Daher kann die erste Anlagefläche und/oder die zweite Anlagefläche vorzugsweise keinen Ring, insbesondere keinen Kreisring oder Polygon bilden, sondern die Umfangsfläche des Turms lediglich zu einem Teil seines Umfangs bedecken.

Die erste Anlagefläche und/oder die zweite Anlagefläche kann vorzugsweise eben ausgebildet sein, insbesondere nicht gekrümmt, oder einen Radius aufweisen. Der Radius kann vorzugsweise einem Radius der Umfangsfläche des ersten Turmsegments und/oder des zweiten Turmsegments entsprechen oder geringfügig davon abweichen. Insbesondere, wenn die erste Anlagefläche und/oder die zweite Anlagefläche die Form eines Mantelsegments eines Kegels aufweist, kann sich dieser Radius in einer im Einbauzustand vertikalen Richtung verändern, insbesondere nach oben verjüngen.

Türme von Windenergieanlagen weisen in der Regel im Einbauzustand eine vertikale Längsachse auf und einen im Wesentlichen ringförmigen Querschnitt orthogonal zu dieser Längsachse. Dieser im Wesentlichen ringförmige Querschnitt kann kreisringförmig ausgebildet sein oder auch eine polygonale Form aufweisen. Unter dem Begriff ringförmig wird daher in dieser Anmeldung nicht nur eine kreisringförmige Ausgestaltung verstanden, sondern auch eine polygonale und/oder mehreckige Ausgestaltung mit mehreren geraden Abschnitten. Im Einbauzustand können aneinander angeordnete Turmsegmente, insbesondere vertikal und/oder horizontal benachbarte Turmsegmente, mittels der Kopplungsvorrichtung miteinander verbunden sein. Insbesondere kann die Koppelplatte hierbei an der Umfangsfläche des ersten Turmsegments und der Umfangsfläche des zweiten Turmsegments angeordnet sein. Als Einbauzustand wird vorzugsweise ein Zustand verstanden, der sich auf den vertikal ausgerichteten Turm bezieht. Die für den Einbauzustand beschriebenen Ausrichtungen sind im Fertigungszustand und/oder Transportzustand entsprechend an temporär nicht vertikal ausgerichtete Längsachse des Turms bzw. eines Teils davon anzupassen.

In einem Montagezustand kann beispielsweise die Kopplungsvorrichtung an dem ersten Turmsegment angeordnet sein. Insbesondere kann hierbei der Befestigungsabschnitt an dem ersten Turmsegment befestigt sein, sodass der Verbindungsabschnitt über einen stoßseitigen Rand des ersten Turmsegments hervorsteht. Unter dem stoßseitigen Rand kann hierbei vorzugsweise ein Rand einer Endfläche des ersten Turmsegments verstanden werden, die im Einbauzustand auf eine Endfläche des zweiten Turmsegments trifft und den Stoß bildet.

Unter einem Stoß kann insbesondere eine Stelle verstanden werden, an der aneinander angeordnete Turmsegmente mit ihren Endflächen aufeinandertreffen. Der Stoß kann hierbei im Einbauzustand sich im Wesentlichen in eine horizontale Richtung, also in Umfangsrichtung, oder in eine vertikale Richtung, also in Längsrichtung, erstrecken. Der Stoßbereich beschreibt insbesondere einen Bereich des ersten Turmsegments und des zweiten Turmsegments, an dem die Kopplungsvorrichtung im Einbauzustand angeordnet wird.

Sofern vorliegend auf den Turm, einen Teil eines Turms, dass Turmsegment und die Kopplungsvorrichtung in Relation zu dem Turmsegment Bezug genommen wird, bezieht sich dies insbesondere auf den Einbauzustand oder den Montagezustand der Kopplungsvorrichtung, in dem die Kopplungsvorrichtung, insbesondere die erste Anlagefläche und/oder die zweite Anlagefläche an der Umfangsfläche des ersten Turmsegments und/oder des zweiten Turmsegments angeordnet ist. Insbesondere beziehen sich Richtungsangaben wie beispielsweise radial, in Umfangsrichtung, etc. vorzugsweise auf einen Turm, insbesondere auf eine im Wesentlichen vertikale Längsachse eines Turms, und beziehen sich auf jegliche Querschnittsformen eines solchen Turms, insbesondere sowohl auf kreisringförmige Querschnitte als auch auf polygonale Querschnitte. Ferner vorzugsweise beziehen sich auch Angaben wie horizontal, vertikal, unten, oben, etc. ebenfalls auf den Einbauzustand und/oder den Montagezustand.

Unter einem Turmsegment kann vorzugsweise ein ringförmiges Element, dass einen kreisringförmigen oder einen polygonalen Querschnitt aufweisen kann, oder ein Teil eines ringförmigen Elements verstanden werden. Somit kann ein Turm insbesondere mehrere im Einbauzustand vertikal übereinander und/oder horizontal nebeneinander angeordnete Turmsegmente umfassen.

Türme, insbesondere Türme von Windenergieanlagen, können sich vorzugsweise von ihrem unteren zu ihrem oberen Ende verjüngen. Die Ausrichtung der Turmwand eines sich verjüngenden Turms weicht in der Regel nur um wenige Grad von der Vertikalen ab. Wenn in dieser Anmeldung auf Ausrichtungen, insbesondere im Einbauzustand, Bezug genommen wird, wie beispielsweise oben, unten, radial, horizontal, vertikal, etc., soll dies daher entsprechend auch für sich verjüngen die Türme und dementsprechend leicht gegenüber der Vertikalen geneigten Turmwände gelten.

Verschiedene Bauweisen für Türme von Windenergieanlagen sind bekannt. Insbesondere haben sich Türme in Massivbauweise, aus Beton und/oder Stahlbeton und/oder Spannbeton und/oder Stahl durchgesetzt. Die hier vorliegende Erfindung bezieht sich insbesondere auf Türme in Stahlbauweise oder Hybridbauweise.

Die erste Anlagefläche dient insbesondere dazu, die Kopplungsvorrichtung, insbesondere die Koppelplatte, an dem Turmsegment anzuordnen. Insbesondere kann der Befestigungsabschnitt ausgebildet sein, um die Koppelplatte an dem ersten Turmsegment zu befestigen. Beispielsweise kann der Befestigungsabschnitt Durchgangsöffnungen zum Durchführen eines Befestigungselements, insbesondere eines Gewindeelements, aufweisen. Vorzugsweise kann die Koppelplatte derart an dem ersten Turmsegment angeordnet werden, dass die Durchgangsöffnungen des Befestigungsabschnitts koaxial zu Durchgangsöffnungen des Turmsegments sind, sodass Gewindeelemente, insbesondere Schrauben oder Gewindebolzen, durch die Durchgangsöffnungen von einer ersten Seite eingeführt, hindurchgeführt und mit einem Gegenelement, insbesondere einer Mutter von einer zweiten Seite verschraubt werden können. Eine derartige Verschraubung der Koppelplatte mit dem Turmsegment kann insbesondere im Fertigungszustand und/oder Transportzustand, also vor dem Aufbau des Turms, erfolgen.

Alternativ kann beispielsweise der Befestigungsabschnitt, insbesondere die erste Anlagefläche des Befestigungsabschnitts an einem Teil des Turmsegments angeschweißt werden. Sofern beispielsweise das Turmsegment aus Beton und/oder Stahlbeton und/oder Spannbeton gefertigt ist, kann vorzugsweise der Befestigungsabschnitt oder Teile des Befestigungsabschnitts einbetoniert werden.

Angrenzend, insbesondere in Richtung einer Haupterstreckungsrichtung der Koppelplatte, an den Befestigungsabschnitt weist die Koppelplatte den Verbindungsabschnitt auf. Der Verbindungsabschnitt und der Befestigungsabschnitt können vorzugsweise im Wesentlichen in derselben Ebene liegen. Das bedeutet vorzugsweise, dass der Verbindungsabschnitt und der Befestigungsabschnitt insbesondere einen Winkel von ungefähr 0 ° aufweisen. Insbesondere kann zwischen dem Verbindungsabschnitt und dem Befestigungsabschnitt ein Winkel liegen oder ein Versatz ausgebildet sein. Ein Winkel oder ein Versatz zwischen dem Verbindungsabschnitt und dem Befestigungsabschnitt kann insbesondere dann vorteilhaft sein, wenn beispielsweise das Turmsegment und/oder die im Einbauzustand aneinander angeordneten Turmsegmente einen Winkel oder einen Versatz bilden.

Die Haupterstreckungsrichtung kann vorzugsweise eine Richtung beschreiben, die sich im Einbauzustand im Wesentlichen orthogonal zu dem Stoß erstreckt.

Die in dem Verbindungsabschnitt angeordnete mindestens eine Durchgangsöffnung ist insbesondere ausgebildet, um ein Gewindeelement, insbesondere eine Schraube oder einen Gewindebolzen, durchzuführen. Im Einbauzustand kann das Gewindeelement vorzugsweise durch eine Durchgangsöffnung, die in dem zweiten Turmsegment ausgebildet sein kann, und die Durchgangsöffnung des Verbindungsabschnitts durchgeführt und mit dem in dem Aufnahmeelement angeordneten Gegenelement, insbesondere einer Mutter, verschraubt sein.

Insbesondere bevorzugt weisen der Verbindungsabschnitt und die Aufnahmeplatte jeweils zwei, drei oder mehrere Durchgangsöffnungen auf. Vorzugsweise können die Durchgangsöffnungen jeweils in einer Reihe angeordnet sein. Insbesondere können die Durchgangsöffnungen in zwei, drei oder mehrere Reihen angeordnet sein. Die Reihen können vorzugsweise im Einbauzustand im Wesentlichen parallel zu dem Stoß sein.

Ein besonderer Vorteil der Kopplungsvorrichtung ist es, dass auf die Ausbildung eines ringförmigen, insbesondere kreisringförmigen, Flansches verzichtet werden kann. Eine derartige Kopplungsvorrichtung kann deutlich kostengünstiger hergestellt und/oder transportiert werden als ringförmige, insbesondere kreisringförmige Verbindungsflansche.

Eine besonders bevorzugte Fortbildung der Kopplungsvorrichtung zeichnet sich dadurch aus, dass die Kopplungsvorrichtung eine korrespondierende Gegenplatte umfasst, wobei die Koppelplatte zur Anlage an einer ersten Umfangsfläche, insbesondere einer Außenumfangsfläche, der aneinander angeordneten Turmsegmente am Stoßbereich ausgebildet ist, wobei die erste Anlagefläche des Befestigungsabschnitts der Koppelplatte ausgebildet ist, um an einer ersten Umfangsfläche, insbesondere einer Außenumfangsfläche, des ersten Turmsegments angeordnet zu werden, und die zweite Anlagefläche des Verbindungsabschnitts der Koppelplatte ausgebildet ist, um an einer ersten Umfangsfläche, insbesondere einer Außenumfangsfläche, des zweiten Turmsegments angeordnet zu werden, und wobei die korrespondierende Gegenplatte zur Anlage an einer zweiten Umfangsfläche, insbesondere einer Innenumfangsfläche, der aneinander angeordneten Turmsegmente am Stoßbereich ausgebildet ist, umfassend einen korrespondierenden Befestigungsabschnitt mit einer korrespondierenden ersten Anlagefläche, die ausgebildet ist, um an einer zweiten Umfangsfläche, insbesondere einer Innenumfangsfläche, des ersten Turmsegments angeordnet zu werden, und einen an den korrespondierenden Befestigungsabschnitt angrenzenden korrespondierenden Verbindungsabschnitt mit einer korrespondierenden zweiten Anlagefläche, die ausgebildet ist, um an einer zweiten Umfangsfläche, insbesondere einer Innenumfangsfläche, des zweiten Turmsegments angeordnet zu werden, und mindestens einer Durchgangsöffnung zum Durchführen eines Gewindeelements.

Gemäß der vorstehend beschriebenen bevorzugten Fortbildung ist zusätzlich zu der Koppelplatte die korrespondierende Gegenplatte vorgesehen, wobei die Koppelplatte und die korrespondierende Gegenplatte zur Anlage an gegenüberliegenden Umfangsflächen der aneinander angeordneten Turmsegmente am Stoßbereich ausgebildet sind. Somit können vorzugsweise die Koppelplatte und die korrespondierende Gegenplatte im Einbauzustand einen Wandungsabschnitt des ersten Turmsegments und des zweiten Turmsegments am Stoßbereich umgeben.

Die Anordnung der Aufnahmeplatte mit dem mindestens einen Aufnahmeelement als eine Verdrehsicherung ermöglicht, dass ein Gewindeelement von einer Seite der korrespondierenden Gegenplatte in die Durchgangsöffnungen der korrespondierenden Gegenplatte, des Turmsegments und der Koppelplatte durchgeführt und mit einem in dem Aufnahmeelement aufnehmbaren Gegenelement verschraubt werden kann. Die korrespondierende Gegenplatte kann vorzugsweise ausgebildet sein, um einen Unterseite eines Kopfes des Gewindeelements oder eines Gegenelements abzustützen. Dadurch können zwei aneinander angeordneter Turmsegmente schnell und zuverlässig mechanisch miteinander verbunden werden.

Die Koppelplatte und die Gegenplatte können vorzugsweise korrespondierend ausgebildet sein, sodass diese an den gegenüberliegenden Umfangsflächen anordenbar sind und im Einbauzustand miteinander verbunden sind, um die aneinander angeordneten Turmsegmente miteinander zu verbinden. Hierbei kann vorzugsweise die mindestens eine Durchgangsöffnung des korrespondierenden Verbindungsabschnitts angeordnet sein, um im Einbauzustand im Wesentlichen koaxial zu der mindestens einen Durchgangsöffnung der Koppelplatte zu sein.

Vorzugsweise können die Koppelplatte und die korrespondierende Gegenplatte im Wesentlichen baugleich ausgebildet sein. Vorzugsweise kann eine Form der Koppelplatte und der korrespondierenden Gegenplatte im Wesentlichen identisch sein, insbesondere, wenn die Koppelplatte und die korrespondierende Gegenplatte eine ebene flächige Erstreckung aufweisen. Vorzugsweise können sich die Koppelplatte und die korrespondierende Gegenplatte dadurch unterscheiden, dass nur an der Koppelplatte die Aufnahmeplatte angeordnet ist und die korrespondierende Gegenplatte frei von einer zusätzlichen Aufnahmeplatte ist.

Insbesondere kann die erste Anlagefläche des Befestigungsabschnitts der Koppelplatte eine Form aufweisen, die einem Segment der ersten Umfangsfläche, insbesondere der Außenumfangsfläche, des Turms entspricht. Vorzugsweise kann die erste korrespondierende Anlagefläche des korrespondierenden Befestigungsabschnitts der korrespondierenden Gegenplatte eine Form aufweise, die einem Segment der zweiten Umfangsfläche, insbesondere der Innenumfangsfläche des Turms entspricht. Vorzugsweise entspricht die Form der ersten Anlagefläche des Befestigungsabschnitts der Koppelplatte somit im Wesentlichen einer Geometrie eines Teils der ersten Umfangsfläche, insbesondere der Außenumfangsfläche, des ersten Turmsegments und die Form der korrespondierenden ersten Anlagefläche des korrespondierenden Befestigungsabschnitts der korrespondierenden Gegenplatte somit im Wesentlichen einer Geometrie eines Teils der zweiten Umfangsfläche, insbesondere der Innenumfangsfläche, des ersten Turmsegments.

Entsprechend kann die zweite Anlagefläche des Verbindungsabschnitts der Koppelplatte eine Form aufweisen, die einem Segment der ersten Umfangsfläche, insbesondere der Außenumfangsfläche, des Turms entspricht. Vorzugsweise kann die zweite korrespondierenden Anlagefläche des korrespondierenden Verbindungsabschnitts der korrespondierenden Gegenplatte eine Form aufweisen, die einem Segment der zweiten Umfangsfläche, insbesondere der Innenumfangsfläche, des Turms entspricht. Vorzugsweise entspricht die Form der zweiten Anlagefläche des Verbindungsabschnitts der Koppelplatte somit im Wesentlichen einer Geometrie eines Teils der ersten Umfangsfläche, insbesondere der Außenumfangsfläche, des zweiten Turmsegments und die Form der korrespondierenden zweiten Anlagefläche des korrespondierenden Verbindungsabschnitts der korrespondierenden Gegenplatte somit im Wesentlichen einer Geometrie eines Teils der zweiten Umfangsfläche, insbesondere der Innenumfangsfläche, des zweiten Turmsegments.

Insbesondere bevorzugt kann der korrespondierende Verbindungsabschnitt zwei, drei oder mehrere Durchgangsöffnungen aufweisen, wobei vorzugsweise die Anzahl der Durchgangsöffnungen des korrespondierenden Verbindungsabschnitts einer Anzahl der Durchgangsöffnungen des Verbindungsabschnitts entsprechen kann. Vorzugsweise können die Durchgangsöffnungen des korrespondierenden Verbindungsabschnitts in einer Reihe angeordnet sein. Insbesondere können die Durchgangsöffnungen in zwei, drei oder mehreren Reihen angeordnet sein. Die Reihen können vorzugsweise im Einbauzustand im Wesentlichen parallel zu dem Stoß sein.

Der korrespondierende Befestigungsabschnitt der korrespondierenden Gegenplatte kann vorzugsweise entsprechend dem Befestigungsabschnitt der Koppelplatte ausgebildet sein. Beispielsweise kann sowohl der Befestigungsabschnitt der Koppelplatte als auch der korrespondierende Befestigungsabschnitt der korrespondierenden Gegenplatte Durchgangsöffnungen aufweisen, die ausgebildet sind, um Gewindeelemente aufzunehmen. Dadurch kann die korrespondierende Gegenplatte vorzugsweise im Einbauzustand und/oder Montagezustand mit der Koppelplatte verbunden und an dem ersten Turmsegment verschraubt werden.

Es ist besonders bevorzugt, dass das mindestens eine Aufnahmeelement einen Querschnitt aufweist, der ausgebildet ist, um das Gegenelement gegen ein Verdrehen zu sichern, wobei das Aufnahmeelement vorzugsweise als eine Ausnehmung in der Aufnahmeplatte ausgebildet ist, oder als eine Senkung in der Aufnahmeplatte ausgebildet ist, wobei vorzugsweise der Querschnitt von einer kreisrunden Form abweicht. Dadurch kann eine besonders einfache Verdrehsicherung bereitgestellt werden.

Insbesondere bevorzugt, kann der Querschnitt entsprechend einer Form des zu verwendenden Gegenelements ausgebildet sein, um eine Verdrehsicherung des Gegenelements gewährleisten zu können. Insbesondere bevorzugt kann beispielsweise der Querschnitt als ein Mehrkant, insbesondere ein Sechskant, ausgebildet sein, um eine Verdrehsicherung für ein mehrkantiges, insbesondere sechskantiges, Gegenelement, vorzugsweise eine Mutter, gewährleisten zu können.

Insbesondere bevorzugt kann die Aufnahmeplatte als ein Blech mit ausgestanzten Formen zur Aufnahme der Gegenelemente ausgebildet sein. Dadurch kann ein zusätzliches Gewicht der Aufnahmeplatte gering gehalten und gleichzeitig eine einfache und zuverlässige Verdrehsicherung bereitgestellt werden.

In einer weiteren bevorzugten Ausführungsvariante der Koppelungsvorrichtung ist vorgesehen, dass das mindestens eine Aufnahmeelement als eine Verliersicherung zum Halten des Gegenelements an der Aufnahmeplatte ausgebildet ist. Durch die zusätzliche Ausgestaltung des Aufnahmeelements als eine Verliersicherung kann die Montage weiter vereinfacht und die Montagezeit verkürzt werden.

Insbesondere kann das Gegenelement vormontiert werden und/oder in das Aufnahmeelement eingesetzt werden, um in einem nächsten Schritt das Gewindeelement mit dem Gegenelement verschrauben zu können. Das Aufnahmeelement ist demnach ausgebildet, um ein Herausfallen des Gegenelements nach einem Einsetzen des Gegenelements in das Aufnahmeelement zu verhindern.

Es ist besonders bevorzugt, wenn die Aufnahmeplatte mindestens eine Durchgangsöffnung zum Durchführen des Gewindeelements und/oder des Gegenelements aufweist, wobei das mindestens eine Aufnahmeelement einen Halter umfasst, der an einer der Koppelplatte abgewandten Seite der Aufnahmeplatte im Bereich der mindestens einen Durchgangsöffnung angeordnet ist und einen Hohlraum zum Halten des Gegenelements zumindest teilweise begrenzt. Durch einen derartigen Halter kann das aufzunehmende Gegenelement sicher an der Aufnahmeplatte gehalten werden, um mit einem Gewindeelement verschraubt zu werden. Dadurch kann die Montage weiter vereinfacht werden.

Der Hohlraum des Halters kann insbesondere einen Innendurchmesser aufweisen, der größer ist, als ein Außendurchmesser des aufzunehmenden Gegenelements. Alternativ kann der Hohlraum des Halters insbesondere einen Innendurchmesser aufweisen, der gleich dem Außendurchmesser des aufzunehmenden Gegenelements ist. Insbesondere kann ein Querschnitt des Halters, insbesondere eine Form und/oder eine Abmessung des Hohlraums, an einen Querschnitt, insbesondere eine Form und/oder eine Abmessung, des aufzunehmenden Gegenelements angepasst sein.

Insbesondere bevorzugt, kann ein Querschnitt, insbesondere die Form und/oder die Abmessung, des Halters ausgebildet sein, um das Gegenelement gegen ein Verdrehen zu sichern. Gemäß dieser Ausgestaltung kann der Halter vorzugsweise sowohl als Verliersicherung als auch als Verdrehsicherung ausgebildet sein.

Es ist bevorzugt, dass der Halter miteinander verbundene Stege umfasst, die an der Aufnahmeplatte befestigt sind und den Hohlraum begrenzen, wobei vorzugsweise der Halter mindestens einen Klemmschenkel umfasst, der mit den Stegen verbunden ist und aus einer Ruheposition, in der der mindestens eine Klemmschenkel einen ersten Querschnitt des Halters begrenzt, in eine Klemmposition zum Einspannen des Gegenelements, in der der mindestens eine Klemmschenkel einen zweiten Querschnitt des Halters, der größer ist als der erste Querschnitt, begrenzt, bewegbar ist, wobei vorzugsweise der mindestens eine Klemmschenkel in der Klemmposition eine Klemmkraft aufweist, die ausgebildet ist, um das Gegenelement verdrehsicher zu halten.

Durch die Ausbildung des Halters mit miteinander verbundenen Stegen kann eine besonders einfache Verliersicherung mit einem geringen zusätzlichen Gewicht bereitgestellt werden. Durch den mindestens einem Klemmschenkel kann eine besonders einfache Ausführungsvariante einer Kombination aus der Verliersicherung und der Verdrehsicherung bereitgestellt werden.

Gemäß einer weiteren Ausführungsvariante der Kopplungsvorrichtung ist vorgesehen, dass die Kopplungsvorrichtung eine Abdeckung umfasst, die an einer von der Koppelplatte abgewandten Seite der Aufnahmeplatte und/oder an der Außenfläche des Verbindungsabschnitts der Koppelplatte angeordnet ist, wobei die Abdeckung das mindestens eine Aufnahmeelement und/oder die Aufnahmeplatte umgibt.

Vorzugsweise kann die Abdeckung als eine zusätzliche Verliersicherung ausgebildet sein ausgebildet sein. Durch die Abdeckung als eine zusätzliche Verliersicherung, kann vorzugsweise die Notwendigkeit einer weiteren Verliersicherung entfallen.

Vorzugsweise kann die Abdeckung als ein Witterungsschutz ausgebildet sein. Insbesondere kann die Abdeckung ausgebildet sein, um das mindestens eine Aufnahmeelement und/oder die Aufnahmeplatte von einer Umgebung abdichtet. Sofern die Abdeckung insbesondere ausgebildet ist, um die Aufnahmeplatte und/oder eine Verschraubung des Gewindeelements mit dem Gegenelement im Bereich der Aufnahmeplatte von einer Umgebung abzudichten, kann die Abdichtung, vorzugsweise auch zusätzlich zu einer weiteren Verliersicherung als Witterungsschutz, insbesondere über den vorstehend beschriebenen Halter angeordnet werden.

Insbesondere bevorzugt, kann die Abdeckung als ein Kantblech ausgebildet sein, das an der von der Koppelseite abgewandten Seite der Aufnahmeplatte und/oder an der Außenfläche des Verbindungsabschnitts der Koppelplatte angeordnet ist.

Es ist besonders bevorzugt, wenn die Kopplungsvorrichtung ein Futterelement umfasst, das ausgebildet ist, um an der ersten Anlagefläche des Befestigungsabschnitts und/oder der zweiten Anlagefläche des Verbindungsabschnitts der Koppelplatte angeordnet zu werden oder gegebenenfalls an der korrespondierenden ersten Anlagefläche des korrespondierenden Befestigungsabschnitts und/oder der korrespondierenden zweiten Anlagefläche des korrespondierenden Verbindungsabschnitts der korrespondierenden Gegenplatte angeordnet zu werden, wobei vorzugsweise das Futterelement mindestens eine Durchgangsöffnung zum Durchführen des Gewindeelements umfasst und derart anordenbar ist, dass die mindestens eine Durchgangsöffnung des Futterelements und die mindestens eine Durchgangsöffnung, des Verbindungsabschnitts und/oder gegebenenfalls die mindestens eine Durchgangsöffnung des korrespondierenden Verbindungsabschnitts koaxial zueinander sind.

Vorzugsweise kann das Futterelement ausgebildet sein, um im Einbauzustand zwischen der ersten Anlagefläche des Befestigungsabschnitts der Koppelplatte und der ersten Umfangsfläche des ersten Turmsegments und/oder der zweiten Anlagefläche des Verbindungsabschnitts der Koppelplatte und der ersten Umfangsfläche des zweiten Turmsegments angeordnet zu werden.

Vorzugsweise kann das Futterelement ausgebildet sein, um im Einbauzustand zwischen der ersten korrespondierenden Anlagefläche des korrespondierenden Befestigungsabschnitts der Koppelplatte und der zweiten Umfangsfläche des ersten Turmsegments und/oder der zweiten korrespondierenden Anlagefläche des korrespondierenden Verbindungsabschnitts der korrespondierenden Gegenplatte und der Umfangsfläche des zweiten Turmsegments angeordnet zu werden.

Insbesondere bevorzugt können zwei, drei oder mehrere Futterelemente vorgesehen sein, die ausgebildet sind, um an der ersten Anlagefläche des Befestigungsabschnitts und/oder der zweiten Anlagefläche des Verbindungsabschnitts der Koppelplatte angeordnet zu werden und/oder gegebenenfalls an der korrespondierenden ersten Anlagefläche des korrespondierenden Befestigungsabschnitts und/oder der korrespondierenden zweiten Anlagefläche des korrespondierenden Verbindungsabschnitts der korrespondierenden Gegenplatte angeordnet zu werden.

Das Futterelement kann vorzugsweise als ein Futterblech, insbesondere eine Platte, ausgebildet sein. Durch die Anordnung des Futterelements können insbesondere Luftspalten minimiert werden und dadurch die Zuverlässigkeit der Verbindung weiter erhöht werden.

Es ist besonders bevorzugt, dass die Kopplungsvorrichtung das Gegenelement umfasst, wobei vorzugsweise das Gegenelement an dem Aufnahmeelement vormontiert ist, wobei vorzugsweise das Gegenelement als eine Mutter ausgebildet ist, vorzugsweise umfassend eine Unterlegscheibe mit einer Auflagefläche für die Mutter.

Erfindungsgemäß ist vorgesehen, dass die Kopplungsvorrichtung eine Führungsnase umfasst, die an einem in einer Haupterstreckungsrichtung der Koppelplatte an den Verbindungsabschnitt angrenzenden äußeren Rand der Koppelplatte angeordnet ist und schräg von dem äußeren Rand absteht, oder gegebenenfalls an einem in einer Haupterstreckungsrichtung der korrespondierenden Gegenplatte an den korrespondierenden Verbindungsabschnitt angrenzenden äußeren Rand der korrespondierenden Gegenplatte angeordnet ist und schräg von dem äußeren Rand absteht, wobei sich vorzugsweise die Führungsnase ausgehend von den äußeren Rand in einem Winkel zwischen 90 ° und 180 ° zu dem Verbindungsabschnitt oder gegebenenfalls zu dem korrespondierenden Verbindungsabschnitt erstreckt. Durch die Anordnung der Führungsnase kann ein Anordnen der Turmsegmente aneinander, vorzugsweise übereinander, weiter vereinfacht werden. Somit kann auch der Montageaufwand des gesamten Turms weiter reduziert werden.

Vorzugsweise kann die Führungsnase im Einbauzustand sich ausgehend von dem äußeren Rand nach radial einwärts oder nach radial auswärts erstrecken. Insbesondere bevorzugt, kann sich die Führungsnase ausgehend von dem äußeren Rand in einen Winkel zwischen 100° und 160°, insbesondere zwischen 110° und 145°, insbesondere zwischen 120° und 140°, erstrecken.

Die Führungsnase ist insbesondere dahingehend vorteilhaft, dass diese ausgebildet ist, um ein erstes Turmsegment beim Absenken des ersten Turmsegments auf das zweite Turmsegment und/oder beim Anordnen des ersten Turmsegments an dem zweiten Turmsegment zu führen oder, um das zweite Turmsegment beim Absenken auf das erste Turmsegment und/oder beim Anordnen an dem ersten Turmsegment zu führen. Dadurch können die Turmsegmente besonders einfach aneinander angeordnet werden. Zudem kann insbesondere gewährleistet werden, dass die Turmsegmente exakt positioniert werden, um eine zuverlässige Verbindung der Turmsegmente mittels der Kopplungsvorrichtung zu ermöglichen.

Gemäß einem weiteren Aspekt wird die eingangs genannte Aufgabe gelöst durch ein Turmsegment für einen rohrförmigen Turm einer Windenergieanlage, umfassend zwei, drei oder mehrere Kopplungsvorrichtungen, wie vorstehend beschrieben, wobei die erste Anlagefläche des Befestigungsabschnitts der Koppelplatte an der Umfangsfläche des Turmsegments am Stoßbereich angeordnet ist, wobei jeweils der Verbindungsabschnitt der Koppelplatte über einen stoßseitigen Rand des Turmsegments hervorsteht.

Durch Befestigen jeweils des Befestigungsabschnitts der Koppelplatten an dem Turmsegment am Stoßbereich können die zwei, drei oder mehreren Kopplungsvorrichtungen an dem Turmsegment vormontiert werden. Dadurch wird ein Turmsegment bereitgestellt, das an ein weiteres Turmsegment angeordnet und über die Kopplungsvorrichtung mit dem weiteren Turmsegment verbunden werden kann. Durch den über den stoßseitigen Rand hervorstehenden Verbindungsabschnitt kann insbesondere das Turmsegment besonders einfach und exakt an dem weiteren Turmsegment angeordnet werden. Darüber hinaus ermöglicht die Aufnahmeplatte an der der zweiten Anlagefläche des Verbindungsabschnitts gegenüberliegenden Außenfläche eine besonders einfache Montage.

In einer bevorzugten Ausführungsvariante des Turmsegments ist vorgesehen, dass die Kopplungsvorrichtungen jeweils eine korrespondierende Gegenplatte, wie vorstehend beschrieben, umfassen. Vorzugsweise kann die erste korrespondierende Anlagefläche des korrespondierenden Befestigungsabschnitts der korrespondierenden Gegenplatte an der zweiten Umfangsfläche des Turmsegments am Stoßbereich angeordnet sein. In dieser bevorzugten Ausführungsvariante kann die erste Anlagefläche des Befestigungsabschnitts der Koppelplatte an der ersten Umfangsfläche des Turmsegments am Stoßbereich angeordnet sein. Insbesondere können jeweils die Koppelplatte und die korrespondierende Gegenplatte an gegenüberliegenden Umfangsflächen, insbesondere der Innenumfangsfläche und der Außenumfangsfläche, des Turmsegments am Stoßbereich angeordnet sein. Dadurch steht auch der korrespondierende Verbindungsabschnitt der korrespondierenden Gegenplatte über den stoßseitigen Rand des Turmsegments hervor. Hierbei kann vorzugsweise die zweite Anlagefläche des Verbindungsabschnitts der Koppelplatte beabstandet von der zweiten korrespondierenden Anlagefläche des korrespondierenden Verbindungsabschnitts der korrespondierenden Gegenplatte sein. Dieser Abstand kann vorzugsweise ausgebildet sein, um das weitere Turmsegment zwischen die Anlageflächen einzuführen, um dieses jeweils mit der Koppelplatte und der korrespondierenden Gegenplatte zu verbinden.

Besonders bevorzugt kann das Turmsegment zwei, drei oder mehrere Kopplungsvorrichtungen, wie vorstehend beschrieben, umfassen, wobei jeweils die erste Anlagefläche des Befestigungsabschnitts der Koppelplatte und die erste korrespondierende Anlagefläche des korrespondierenden Befestigungsabschnitts der korrespondierenden Gegenplatte zueinander ausgerichtet und an den gegenüberliegenden Umfangsflächen des Turmsegments am Stoßbereich angeordnet sind, wobei jeweils der Verbindungsabschnitt der Koppelplatte und der korrespondierende Verbindungsabschnitt der korrespondierenden Gegenplatte beabstandet zueinander über den stoßseitigen Rand des Turmsegments hervorstehen und koaxial zueinander ausgerichtete Durchgangsöffnungen umfassen.

Gemäß einem weiteren Aspekt wird die eingangs genannte Aufgabe gelöst durch einen Teil eines Turmes einer Windenergieanlage, umfassend ein erstes Turmsegment, insbesondere wie vorstehend beschrieben, und ein zweites Turmsegment, die über zwei, drei oder mehreren Kopplungsvorrichtungen, wie vorstehend beschrieben, miteinander verbunden sind, wobei jeweils die erste Anlagefläche des Befestigungsabschnitts der Koppelplatte an der Umfangsfläche des ersten Turmsegments am Stoßbereich angeordnet ist, und wobei jeweils die zweite Anlagefläche des Verbindungsabschnitts der Koppelplatte an der Umfangsfläche des zweiten Turmsegments am Stoßbereich angeordnet ist, wobei das zweite Turmsegment mindestens eine Durchgangsöffnung aufweist, die koaxial zu der mindestens einen Durchgangsöffnung des Verbindungsabschnitts der Koppelplatte ist, wobei jeweils der Verbindungsabschnitt der Koppelplatte mit dem zweiten Turmsegment über ein in den Durchgangsöffnungen angeordnetes Gewindeelement, das mit einem in dem Aufnahmeelement aufgenommenen Gegenelement verschraubt ist, verbunden ist.

Besonders bevorzugt können die Kopplungsvorrichtungen jeweils eine korrespondierende Gegenplatte umfassen. Insbesondere bevorzugt kann jeweils die erste Anlagefläche des Befestigungsabschnitts der Koppelplatte und die erste korrespondierende Anlagefläche des korrespondierenden Befestigungsabschnitts der korrespondierenden Gegenplatte zueinander ausgerichtet und an den gegenüberliegenden Umfangsflächen des ersten Turmsegments am Stoßbereich angeordnet sein. Insbesondere können jeweils die zweite Anlagefläche des Verbindungsabschnitts der Koppelplatte und die zweite korrespondierende Anlagefläche des korrespondierenden Verbindungsabschnitts der korrespondierenden Gegenplatte an den gegenüberliegenden Umfangsflächen des zweiten Turmsegments am Stoßbereich angeordnet sein. Vorzugsweise kann das zweite Turmsegment mindestens eine Durchgangsöffnung aufweisen, die in dem hier beschriebenen Einbauzustand koaxial zu der mindestens einen Durchgangsöffnung des Verbindungsabschnitts der Koppelplatte und der mindestens einen Durchgangsöffnung des korrespondierenden Verbindungsabschnitts der korrespondierenden Gegenplatte ist. Besonders bevorzugt können der Verbindungsabschnitt der Koppelplatte und der korrespondierende Verbindungsabschnitt der korrespondierenden Gegenplatte mit dem zweiten Turmsegment über ein in den Durchgangsöffnungen angeordnetes Gewindeelement, das mit einem in dem Aufnahmeelement aufgenommenen Gegenelement verschraubt ist, verbunden sein.

Gemäß einem weiteren Aspekt wird die eingangs genannte Aufgabe gelöst durch einen Turm für eine Windenergieanlage, umfassend mindestens einen Teil eines Turms, wie vorstehend beschrieben, und/oder mindestens ein Turmsegment, wie vorstehend beschrieben, und/oder mindestens eine Kopplungsvorrichtung, wie vorstehend beschrieben.

Darüber hinaus wird die eingangs genannte Aufgabe gelöst durch eine Windenergieanlage, umfassend einen Turm, wie vorstehend beschrieben, und/oder mindestens einen Teil eines Turms, wie vorstehend beschrieben, und/oder mindestens ein Turmsegment, wie vorstehend beschrieben, und/oder mindestens eine Kopplungsvorrichtung, wie vorstehend beschrieben.

Gemäß einem weiteren Aspekt wird die eingangs genannte Aufgabe gelöst durch ein Verfahren gemäß Anspruch 15 zur Montage von aneinander angeordneten Turmsegmenten eines rohrförmigen Turms einer Windenergieanlage, umfassend die Schritte: Bereitstellen eines ersten Turmsegments, insbesondere wie vorstehend beschrieben, und eines zweiten Turmsegments, Bereitstellen von zwei, drei oder mehreren Kopplungsvorrichtungen, wie vorstehend beschrieben, Vormontieren der zwei, drei oder mehreren Kopplungsvorrichtungen an dem ersten Turmsegment durch Anordnen der ersten Anlagefläche des Befestigungsabschnitts der Koppelplatte an einer Umfangsfläche des ersten Turmsegments am Stoßbereich, Anordnen des ersten Turmsegments und des zweiten Turmsegments aneinander und Koppeln des ersten Turmsegments und des zweiten Turmsegments durch Verbinden des Verbindungsabschnitts der Koppelplatte mit dem zweiten Turmsegment durch Einführen von Gewindeelementen in jeweils eine Durchgangsöffnung des zweiten Turmsegments von einer einer zweiten Umfangsfläche des zweiten Turmsegments zugewandten Seite und Durchführen der Gewindeelemente durch die Durchgangsöffnungen des zweiten Turmsegments und der Koppelplatte und Vorspannen einer Verbindung der Gewindeelemente mit in den Aufnahmeelementen aufgenommenen Gegenelementen durch Aufbringen einer Vorspannkraft auf die Verbindung von der der zweiten Umfangsfläche des zweiten Turmsegments zugewandten Seite.

In einer bevorzugten Variante kann dieses Verfahren, insbesondere der Schritt des Vormontierens der zwei, drei oder mehreren Kopplungsvorrichtungen an dem ersten Turmsegment, folgende Schritte umfassen: Ausrichten der ersten Anlagefläche des Befestigungsabschnitts der Koppelplatte und der korrespondierenden ersten Anlagefläche des korrespondierenden Befestigungsabschnitts der korrespondierenden Gegenplatte zueinander und Anordnen der ersten Anlagefläche des Befestigungsabschnitts der Koppelplatte und der korrespondierenden ersten Anlagefläche des korrespondierenden Befestigungsabschnitts der korrespondierenden Gegenplatte an den gegenüberliegenden Umfangsflächen am Stoßbereich.

Ferner kann in einer weitere bevorzugten Variante dieses Verfahren, insbesondere der Schritt des Koppelns des ersten Turmsegments und des zweiten Turmsegment, folgende Schritte umfassen: Koppeln des ersten Turmsegments und des zweiten Turmsegments durch Verbinden des Verbindungsabschnitts der Koppelplatte und des korrespondierenden Verbindungsabschnitts der korrespondierenden Gegenplatte mit dem zweiten Turmsegment, durch Einführen der Gewindeelemente in die Durchgangsöffnungen der korrespondierenden Gegenplatte und Durchführen der Gewindeelemente durch die Durchgangsöffnungen der korrespondierenden Gegenplatte, des zweiten Turmsegments und der Koppelplatte, und Vorspannen einer Verbindung der Gewindeelemente mit den in den Aufnahmeelementen aufgenommenen Gegenelementen durch Aufbringen einer Vorspannkraft auf die Verbindung von einer der korrespondierenden Gegenplatte zugewandten Seite.

Dadurch kann das Aufbringen der Vorspannkraft auf die Verschraubung von einer Seite, insbesondere von einer Innenseite erfolgen.

In einem Innenraum eines Turms können vorzugsweise Podeste vorhanden sein, sodass ein Stoß der aneinander angeordneten Turmsegmente von der Innenseite für ein Personal leicht zugänglich ist. Die Notwendigkeit des Steckens eines Gewindeelements, insbesondere einer Schraube, von einer Außenseite, entfällt durch diese Ausgestaltung. Dadurch können eine besonders einfache Montage sowie eine Reduzierung des Montageaufwands und eine Erhöhung der Arbeitssicherheit gewährleistet werden.

Vorzugsweise kann jeweils ein Gegenelement an jedem Aufnahmeelement, insbesondere angrenzend an eine Durchgangsöffnung der Koppelplatte, vorpositioniert werden, sodass nach dem Positionieren des ersten Turmsegments die Gewindeelemente von der Innenseite in die Durchgangsöffnung eingeführt und in das Gegenelement eingedreht, insbesondere bis zu einem vordefinierten Anschlag, werden können.

Vorzugsweise können, sofern das Gewindeelement ein Gewindebolzen ist, jeweils eine Mutter und vorzugsweise eine Scheibe, montiert und mit dem Gewindebolzen verschraubt werden.

Die Verschraubung kann vorzugsweise mittels eines Drehwinkelverfahrens erfolgen.

Dadurch können insbesondere vergleichbare Bedingungen, wie bei bekannten Kopfbolzenverschraubungen erzeugt werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Kopplungsvorrichtung verwiesen. Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2:: eine perspektivische Ansicht einer beispielhaften Ausführungsform einer Kopplungsvorrichtung;
- Figur 3:: eine perspektivische Ansicht einer beispielhaften, nicht beanspruchten Ausführungsform eines Turmsegments mit einer Kopplungsvorrichtung;
- Figur 4:: eine dreidimensionale Ansicht eines Ausschnitts einer beispielhaften Ausführungsform eines Teils eines Turms einer Windenergieanlage;
- Figur 5:: eine perspektivische Ansicht einer beispielhaften Ausführungsform einer Koppelplatte;
- Figur 6:: eine Draufsicht auf die beispielhafte Ausführungsform der Koppelplatte gemäß Figur 5;
- Figur 7:: eine perspektivische Ansicht einer beispielhaften Ausführungsform einer Aufnahmeplatte;
- Figur 8:: eine Draufsicht auf die beispielhafte Ausführungsform der Aufnahmeplatte gemäß Fig. 7;
- Figur 9:: eine perspektivische Ansicht einer beispielhaften Ausführungsform einer Abdeckung;
- Figur 10:: eine Draufsicht auf die beispielhafte Ausführungsform der Abdeckung gemäß Figur 9;
- Figur 10A:: eine Seitenansicht der Abdeckung gemäß Figur 10;
- Figur 11:: eine perspektivische Frontansicht und eine perspektivische Rückansicht einer beispielhaften Ausführungsform einer Aufnahmeplatte;
- Figur 12:: eine dreidimensionale Ansicht eines Ausschnitts einer beispielhaften Ausführungsform eines Teils eines Turms einer Windenergieanlage;
- Figur 13:: eine perspektivische Ansicht mit einer Schnittansicht einer beispielhaften Ausführungsform einer Kopplungsvorrichtung;
- Figur 14:: ein beispielhaftes Verfahren zur Montage von aneinander angeordneten Turmsegmenten.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

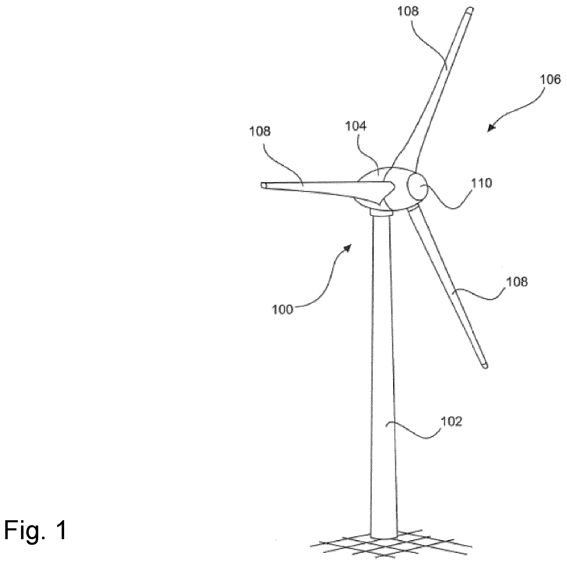

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass weder einzelne Turmsegmente noch eine Kopplungsvorrichtung erkennbar sind.

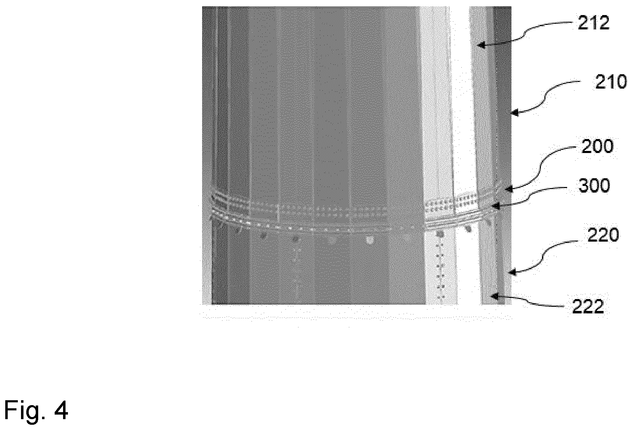

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 besteht hierbei aus aneinander angeordneten Turmsegmenten, die mittels Kopplungsvorrichtungen miteinander verbunden sind (in Figur 1 nicht erkennbar), wie beispielsweise in Figur 4 gezeigt ist. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

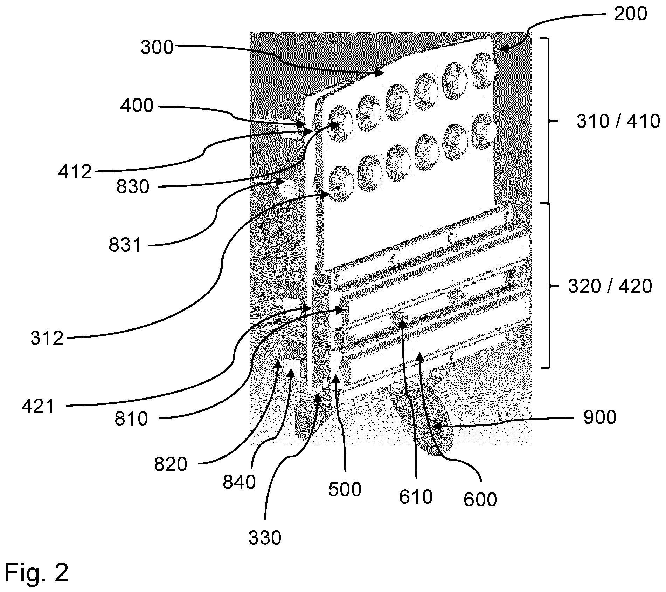

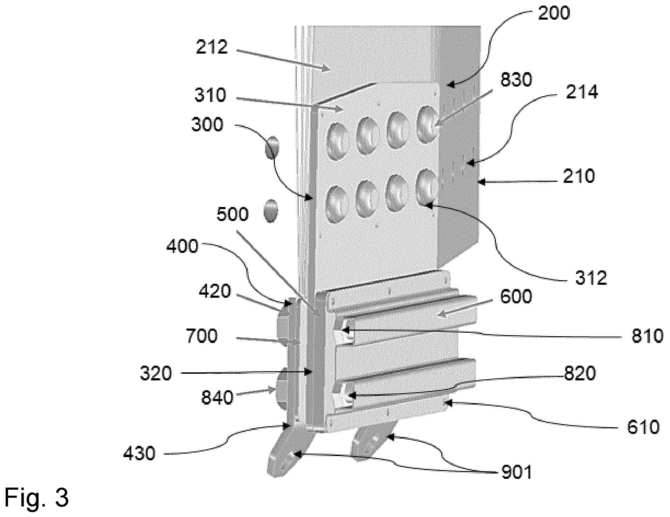

Figur 2 zeigt eine beispielhafte Ausführungsform einer Kopplungsvorrichtung 200 mit einer Koppelplatte 300 und einer korrespondierenden Gegenplatte 400. In dem in Figur 3 gezeigten, nicht beanspruchten Ausführungsbeispiel ohne Führungsnase 900 an der Koppelplatte 300 ist die Kopplungsvorrichtung 200 an einem ersten Turmsegment 210 angeordnet.

Während in den in den Figuren 2 und 3 gezeigten Beispielen jeweils eine Kopplungsvorrichtung 200 mit einer Koppelplatte 300 und einer korrespondierenden Gegenplatte 400 gezeigt sind, ist alternativ auch eine Ausgestaltung einer Kopplungsvorrichtung 200 mit nur einer Koppelplatte 300, also ohne eine korrespondierende Gegenplatte 400 möglich.

Die Koppelplatte 300 weist einen Befestigungsabschnitt 310 und einen Verbindungsabschnitt 320 auf. Der Verbindungsabschnitt 320 grenzt hierbei an den Befestigungsabschnitt 310 an. Die korrespondierende Gegenplatte weist entsprechend der Koppelplatte 300 einen korrespondierenden Befestigungsabschnitt 410 und einen daran angrenzenden korrespondierenden Verbindungsabschnitt 420 auf.

Wie in Figur 3 beispielhaft gezeigt, ist der Befestigungsabschnitt 310 ausgebildet, um an der ersten Umfangsfläche 212 des ersten Turmsegments 210 angeordnet zu werden. Hierzu weist der Befestigungsabschnitt 310 eine erste Anlagefläche (in den Figuren 2 und 3 nicht gezeigt) auf, die in dem Einbauzustand bzw. in dem Montagezustand an der ersten Umfangsfläche 212 des ersten Turmsegments 210 angeordnete werden kann. Der korrespondierende Befestigungsabschnitt 410 weist entsprechend eine korrespondierende erste Anlagefläche 411 auf, die, wie in Figur 2 gezeigt, der ersten Anlagefläche des Befestigungsabschnitts 310 der Koppelplatte 300 zugewandt ist. Die korrespondierende erste Anlagefläche 411 ist entsprechend ausgebildet, um im Einbauzustand bzw. im Montagezustand an der zweiten Umfangsfläche (in den Figuren 2 und 3 nicht gezeigt) des ersten Turmsegments 210 angeordnet zu werden.

Figur 3 zeigt diesen Montagezustand mit dem an der ersten Umfangsfläche 212 des ersten Turmsegments 210 angeordneten Befestigungsabschnitt 310 der Koppelplatte 300 und dem an der zweiten Umfangsfläche des ersten Turmsegments 210 angeordneten korrespondierenden Befestigungsabschnitt 410 der korrespondierenden Gegenplatte 400 (in Figur 3 nicht gezeigt).

Das erste Turmsegment 210 weist in Reihe angeordnete Durchgangsöffnungen 214 auf. Der Befestigungsabschnitt 310 und der korrespondierende Befestigungsabschnitt 410 weisen entsprechend in Reihe angeordnete Durchgangsöffnungen 312, 412 auf, die koaxial zu den Durchgangsöffnungen 214 des ersten Turmsegments sind. In die Durchgangsöffnungen 312 des Befestigungsabschnitts 310 sind Schrauben 830 von einer Außenseite, also von der dem Befestigungsabschnitt 310 zugewandten Seite der Kopplungsvorrichtung 200, eingeführt, durch die Durchgangsöffnungen 312 des Befestigungsabschnitts 310, die Durchgangsöffnungen 214 des ersten Turmsegments 210 und die Durchgangsöffnungen 412 des korrespondierenden Befestigungsabschnitt 410 durchgeführt und mit jeweils einer Mutter 831 von einer Innenseite, also von der dem korrespondierenden Befestigungsabschnitt 410 zugewandten Seite der Kopplungsvorrichtung 200, verschraubt.

In dem in Figur 3 gezeigten Beispiel sind jeweils vier Durchgangsöffnungen 312 in zwei parallelen Reihen angeordnet. Figur 2 zeigt beispielhaft jeweils sechs Durchgangsöffnungen 312 in zwei parallelen Reihen.

In Figur 2 ist die Kopplungsvorrichtung 200 ohne das erste Turmsegment 210 gezeigt. Entsprechend sind die Durchgangsöffnungen 312 des Befestigungsabschnitts 310 und die Durchgangsöffnungen 412 korrespondierenden Befestigungsabschnitt 410 koaxial zueinander. Die Schrauben 830 sind entsprechend von der Außenseite eingeführt, durch die Durchgangsöffnungen 312,412 durchgeführt und jeweils mit einer Mutter 831 von der Innenseite verschraubt.

Der Verbindungsabschnitt 320 und der korrespondierende Verbindungsabschnitt 420 weisen zueinander ausgerichtete zweite Anlageflächen 421 (die zweite Anlagefläche des Verbindungsabschnitts der Koppelplatte ist in den Figuren nicht gezeigt) auf. Die zweite Anlagefläche der Koppelplatte 300 und die zweite korrespondierende Anlagefläche 421 der korrespondierenden Gegenplatte 400 sind ausgebildet, um an gegenüberliegenden Umfangsflächen eines zweiten Turmsegments angeordnet zu werden (in den Figuren 2 und 3 nicht dargestellt). In den Figuren 2 und 3 ist jeweils gezeigt, dass Gewindebolzen 820 durch Durchgangsöffnungen (in den Figuren 2 und 3 nicht gezeigt) des korrespondierenden Verbindungsabschnitts 420 der korrespondierenden Gegenplatte 400 eingeführt und durch die Durchgangsöffnungen des korrespondierenden Verbindungsabschnitts 420 der korrespondierenden Gegenplatte 400 und durch die Durchgangsöffnungen 322 des Verbindungsabschnitts 320 der Koppelplatte 300 hindurchgeführt sind und von der Außenseite mit jeweils einer Mutter 810 verschraubt sind.

In den hier gezeigten Ausführungsbeispielen sind die Gewindebolzen 820 an der Innenseite mit jeweils einer Mutter 840 verschraubt. Die korrespondierende Gegenplatte 400 dient hierbei als Auflagefläche für die Muttern 840. Vorzugsweise kann der Gewindebolzen 820 von der Innenseite zunächst bis zu einem vordefinierten Anschlag in die Mutter 810 eingedreht werden und anschließend mittels eines Drehwinkelverfahrens mit der Mutter 840 verschraubt werden.

An einer der zweiten Anlagefläche gegenüberliegenden Außenfläche der Koppelplatte ist zudem eine Aufnahmeplatte 500 mit Aufnahmeelementen zur Aufnahme und als Verliersicherung und/oder Verdrehsicherung der Muttern 810, wie im Folgenden noch näher beschrieben wird, angeordnet.

Die in den Figuren 2 und 3 dargestellten Kopplungsvorrichtungen 200 zeigen auch eine Abdeckung 600, wie im Folgenden noch näher beschrieben wird, die jeweils an einer von der Koppelplatte 300 abgewandten Seite der Aufnahmeplatte 500 angeordnet und über einer Schraubverbindung 610 mit der an dem Verbindungsabschnitt 320 der Koppelplatte 300 angeordneten Aufnahmeplatte 500 verbunden ist.

In Figur 3 ist an der zweiten Anlagefläche des Verbindungsabschnitts 320 der Koppelplatte 300 ein Futterelement 700 angeordnet, das in dem Einbauzustand zwischen der Umfangsfläche des zweiten Turmsegments und der zweiten Anlagefläche 321 des Verbindungsabschnitts 320 der Koppelplatte 300 anordenbar ist.

Das in Figur 2 gezeigte Ausführungsbeispiel weist eine Führungsnase 900 auf, die sich ausgehend von dem äußeren Rand 330 der Koppelplatte 300 in einem Winkel erstreckt und von dem äußeren Rand schräg absteht.

In Figur 3 sind zwei Führungsnasen 901 gezeigt, die schräg von dem äußeren Rand 430 der korrespondierenden Gegenplatte 400 abstehen. Die Führungsnasen 900 erstrecken sich hierbei ausgehend von dem äußeren Rand 430 in einem Winkel zu dem korrespondierenden Verbindungsabschnitt 420.

Durch die vorstehend beschriebene Kopplungsvorrichtung 200 kann diese an dem ersten Turmsegment 210 vormontiert werden, indem der Befestigungsabschnitt 310 der Koppelplatte 300 und der korrespondierenden Befestigungsabschnitt 410 der korrespondierenden Gegenplatte 400 an dem ersten Turmsegment 210 befestigt werden. Nach einem Anordnen des ersten Turmsegments 210 und eines zweiten Turmsegments aneinander, kann die Montage, insbesondere das Verschrauben des Verbindungsabschnitts 320 und des korrespondierenden Verbindungsabschnitts 420 mit dem zweiten Turmsegment 220 von nur einer Seite, insbesondere von der Innenseite, erfolgen. Dadurch kann eine Montage deutlich vereinfacht und entsprechend ein Montageaufwand reduziert werden.

Figur 4 zeigt eine dreidimensionale Ansicht eines Teils eines Turms mit zwei vertikal übereinander angeordneten, koaxialen Turmsegmenten 210, 220. Die aneinander angeordneten Turmsegmente 210, 220 sind mittels mehrerer Kopplungsvorrichtungen 200 miteinander verbunden. Die Kopplungsvorrichtungen 200 umfassen jeweils eine Koppelplatte 300, die den Stoß überlappend an der Umfangsfläche 212 und an der Umfangsfläche 222 der Turmsegmente 210, 220 angeordnet ist.

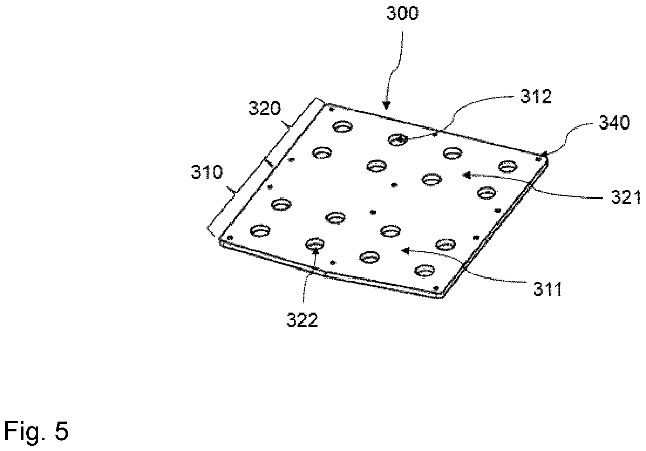

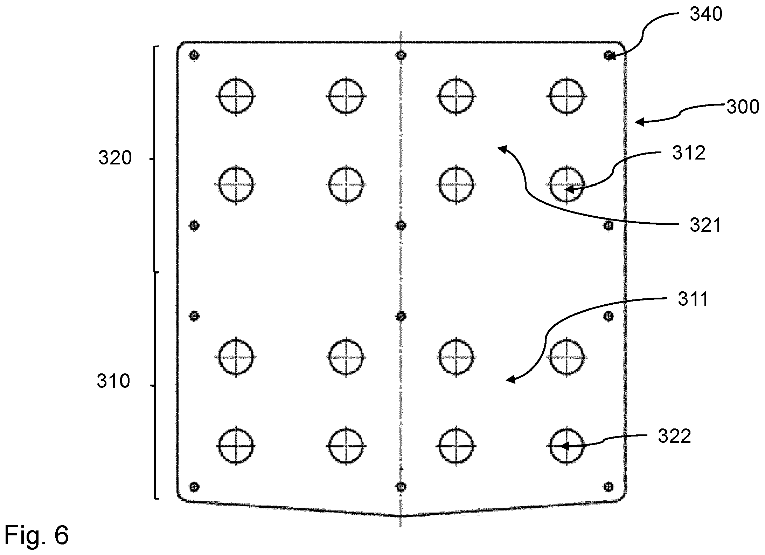

In den Figuren 5 und 6 ist jeweils eine beispielhafte Ausführungsform einer Koppelplatte 300 gezeigt. Die hier gezeigte beispielhafte Koppelplatte 300 weist eine flächige Erstreckung auf und umfasst den Befestigungsabschnitt 310 mit der ersten Anlagefläche 311 und den daran angrenzenden Verbindungsabschnitt 320 mit der zweiten Anlagefläche 321. Sowohl in dem Befestigungsabschnitt 310 als auch in dem Verbindungsabschnitt 320 sind Durchgangsöffnungen 312, 322 in jeweils zwei parallelen Reihen angeordnet.

Zusätzlich sind weitere Durchgangsöffnungen 340 vorgesehen. Die weiteren Durchgangsöffnungen 340 können beispielsweise ausgebildet sein, um eine Aufnahmeplatte und/oder eine Abdeckung an der Koppelplatte 300, insbesondere mittels einer Schraubverbindung oder eines alternativen Befestigungsmittels, zu befestigen und/oder die Koppelplatte 300 an dem ersten Turmsegment und/oder dem zweiten Turmsegment, insbesondere mittels einer Schraubverbindung oder eines alternativen Befestigungsmittels, zu befestigen.

Die korrespondierende Gegenplatte kann im Wesentlichen baugleich zu der in den Figuren 5 und 6 gezeigten Koppelplatte 300 ausgebildet sein.

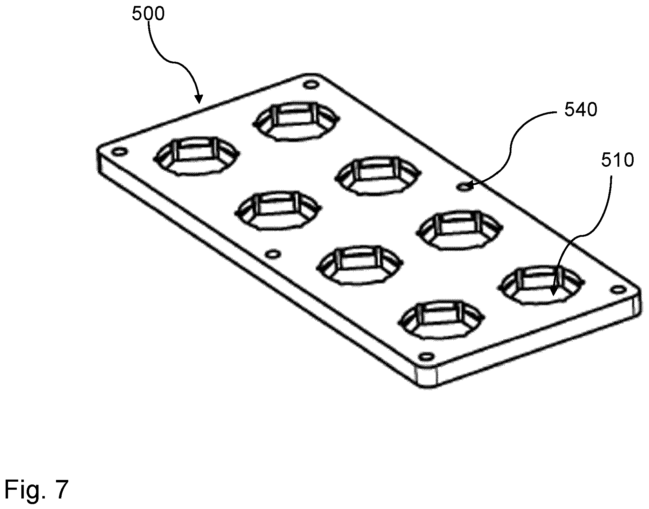

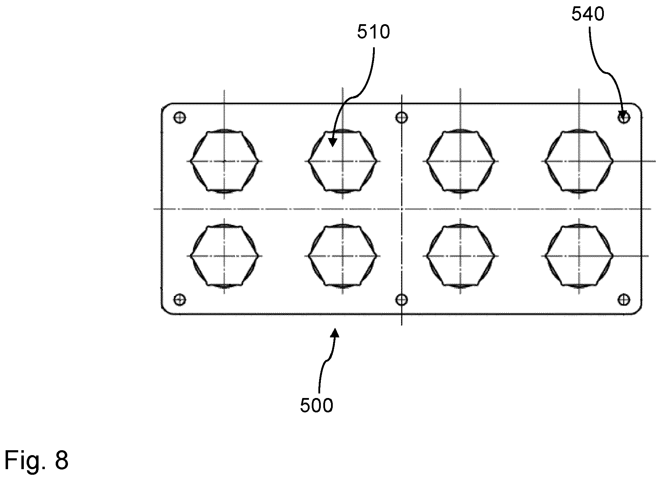

Die Figuren 7 und 8 zeigen eine beispielhafte Ausführungsvariante der Aufnahmeplatte 500. Die Aufnahmeplatte 500 weist in zwei parallelen Reihen angeordnete Aufnahmeelemente 510 in Form von Ausnehmungen in der Aufnahmeplatte 500 auf. Die Aufnahmeelemente 510 weisen in der hier gezeigten Ausführungsform einen sechseckigen Querschnitt auf. Durch die Form des Querschnitts kann ein in dem Aufnahmeelement 510 aufgenommenes Gegenelement, insbesondere eine Sechskant-Mutter gegen ein Verdrehen gesichert werden, sodass eine ein Verschrauben mit dem Gewindeelement verhindernde Drehung des Gegenelements gesperrt werden kann. Die Aufnahmeplatte 500 weist zudem Durchgangsöffnungen 540 auf, die in einem Randbereich der Aufnahmeplatte 500 angeordnet sind. Die Durchgangsöffnungen 540 können beispielsweise ausgebildet sein, um die Aufnahmeplatte 500 an dem Verbindungsabschnitt der Koppelplatte und/oder die Abdeckung an der Aufnahmeplatte 500, insbesondere mittels einer Schraubverbindung, zu befestigen.

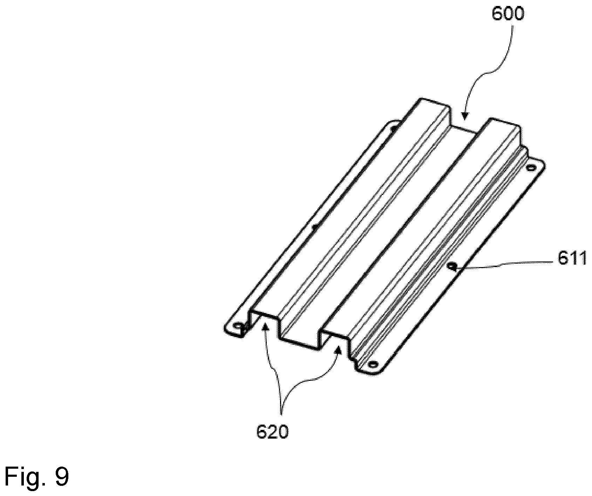

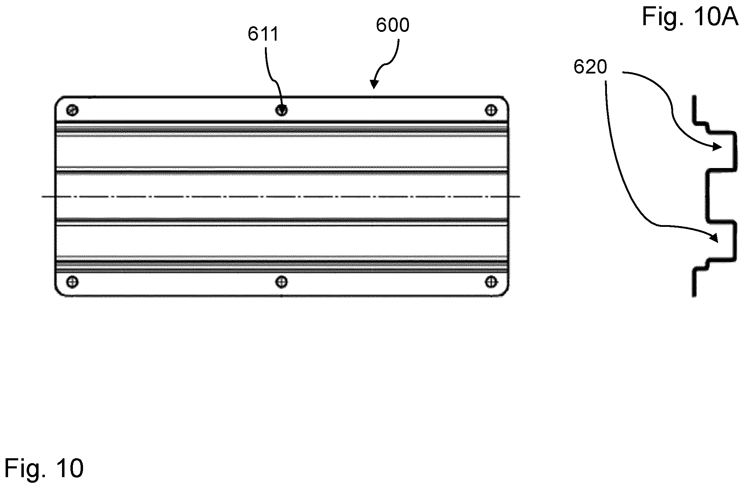

In den Figuren 9, 10 und 10A ist eine beispielhafte Ausführungsform einer Abdeckung 600 gezeigt. Die Abdeckung 600 kann vorzugsweise als Kantblech ausgestaltet sein. Zum Befestigen der Abdeckung 600 an der Aufnahmeplatte und/oder der Koppelplatte umfasst die Abdeckung 600 Durchgangsöffnungen 611. Dadurch kann beispielsweise die Abdeckung 600 mittels eines Befestigungsmittels, insbesondere einer Schraubverbindung, an der Aufnahmeplatte und/oder dem Verbindungsabschnitt der Koppelplatte befestigt werden.

Das hier gezeigte Ausführungsbeispiel der Abdeckung 600 umfasst im Wesentlichen zwei parallele Schienen 620, die ausgebildet sind, um die Gegenelemente zu umgeben und insbesondere vor dem Herausfallen zu sichern. Eine derartige Abdeckung 600 ist insbesondere ausgebildet, um eine Aufnahmeplatte mit Aufnahmeelementen, die in zwei Reihen angeordnet sind, abzudecken. Sofern eine Aufnahmeplatte drei oder mehrere Reihen mit Aufnahmeelementen aufweist, kann vorzugsweise eine Abdeckung mit einer entsprechenden Anzahl, insbesondere zwei oder mehrere, Schienen verwendet werden. Alternativ kann die Abdeckung 600 beispielsweise eine einzige Schiene 620 aufweisen, die ausgebildet ist, um sämtliche Aufnahmeelemente einer Aufnahmeplatte zu umgeben.

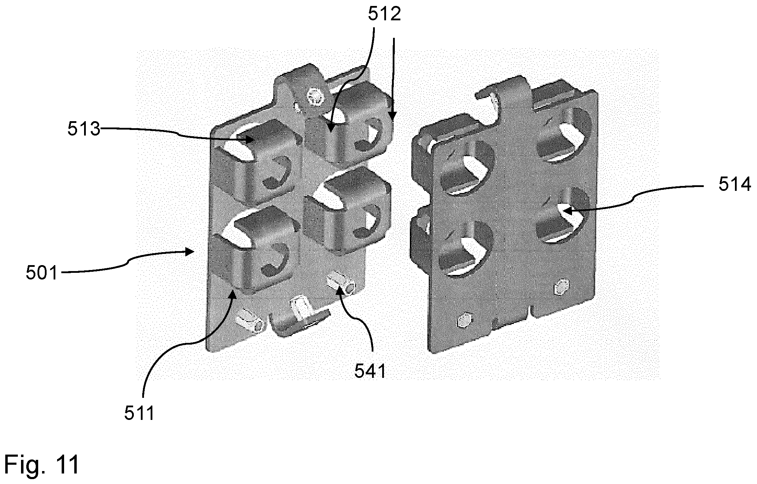

Die Figur 11 zeigt eine alternative Ausgestaltung einer Aufnahmeplatte 501 mit Halter 511, die miteinander verbundene Stege 512 und mit den Stegen 512 verbundene Klemmschenkel 513 umfassen, in zwei verschiedenen Ansichten. Die Stege 512 und die Klemmschenkel 513 begrenzen hierbei einen Hohlraum 514 des Halters 511. Die Klemmschenkel 513 können aus einer Ruheposition in eine Klemmposition bewegt werden. Ein in der Ruheposition begrenzter Querschnitt ist kleiner als ein in der Klemmposition begrenzter Querschnitt. Dadurch kann jeweils ein Gegenelement in jeden Halter eingespannt werden. Die durch das Bewegen der Klemmschenkel 513 von der Ruheposition in die Klemmposition erzeugte Klemmkraft kann vorzugsweise ausreichen, um das Gegenelement verdrehsicher zu halten. Die Aufnahmeplatte 501 weist zudem Befestigungsmittel 541 auf, die ausgebildet sind, um die Aufnahmeplatte 501 an dem Verbindungsabschnitt der Koppelplatte und/oder die Abdeckung auf der Aufnahmeplatte 501 zu befestigen.

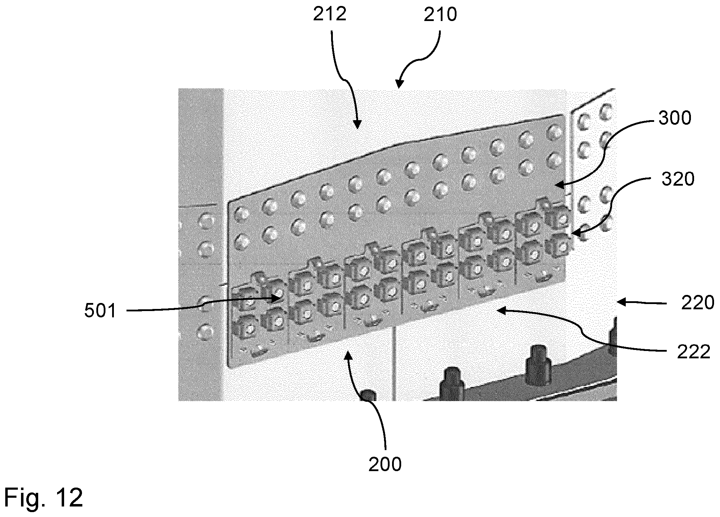

Figur 12 zeigt eine dreidimensionale Ansicht eines Teils eines Turms mit zwei vertikal übereinander angeordneten, koaxialen Turmsegmenten 210, 220. Die aneinander angeordneten Turmsegmente 210, 220 sind einer Kopplungsvorrichtung 200 miteinander verbunden. Die Kopplungsvorrichtung 200 umfasst eine Koppelplatte 300, die den Stoß überlappend an den Umfangsflächen 212, 222 der Turmsegmente 210, 220 angeordnet ist. Gemäß diesem Ausführungsbeispiel ist an dem Verbindungsabschnitt 320 der Koppelplatte 300 eine Aufnahmeplatte 501, wie in Figur 11 gezeigt und vorstehend hierzu beschriebenen, angeordnet.

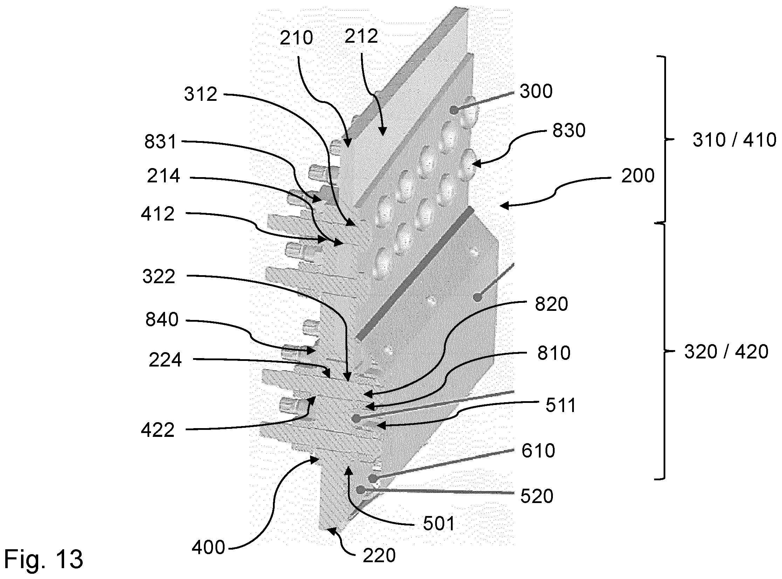

In Figur 13 ist eine Kopplungsvorrichtung 200 gezeigt, die ein erstes Turmsegment 210 und ein zweites Turmsegment 220 koppelt. Die Kopplungsvorrichtung 200 umfasst eine Koppelplatte 300 mit einem Befestigungsabschnitt 310 und einem an den Befestigungsabschnitt 310 angrenzenden Verbindungsabschnitt 320. Die Anlagefläche (in Figur 13 nicht gezeigt) des Befestigungsabschnitts 310 ist an der ersten Umfangsfläche 212 des Turmsegments 210 angeordnet. Der Befestigungsabschnitt 310 weist in zwei parallelen Reihen angeordnete Durchgangsöffnungen 312 auf, die koaxial zu Durchgangsöffnungen 214 des ersten Turmsegments 210 sind.

Die in Figur 13 gezeigte Ausführungsform der Kopplungsvorrichtung 200 weist auch eine korrespondierende Gegenplatte 400 auf, die entsprechend der Koppelplatte 300 einen korrespondierenden Befestigungsabschnitt 410 und einen daran angrenzenden korrespondierenden Verbindungsabschnitt 420 aufweist. Der korrespondiere Befestigungsabschnitt 410 weist ebenfalls Durchgangsöffnungen 412 auf, die koaxial zu den Durchgangsöffnungen 214 des ersten Turmsegments 210 und den Durchgangsöffnungen 312 des Befestigungsabschnitts 310 sind.

In dem in Figur 13 gezeigten Einbauzustand sind Schrauben 830 von einer Außenseite, also der dem Befestigungsabschnitt 310 zugewandten Seite der Kopplungsvorrichtung 200, in die Durchgangsöffnungen 312 des Befestigungsabschnitts 310 eingeführt und durch die Durchgangsöffnungen 312 des Befestigungsabschnitts 310, die Durchgangsöffnungen 214 des erstem Turmsegments 210 und die Durchgangsöffnungen 412 des korrespondierenden Befestigungsabschnitts 410 durchgeführt. Die Schrauben sind von einer Innenseite, also der dem korrespondierenden Befestigungsabschnitt 410 zugewandten Seite der Kopplungsvorrichtung 200, jeweils mit einer Mutter 831 verschraubt.

Der Verbindungsabschnitt 320 und der korrespondierenden Verbindungsabschnitt 420 weisen jeweils zueinander ausgerichtete zweite Anlageflächen (in Figur 13 nicht gezeigt) auf. Diese zwei Anlageflächen sind an jeweils gegenüberliegenden Umfangsflächen des zweiten Turmsegments 220 angeordnet. Der Verbindungsabschnitt 320 und der korrespondierenden Verbindungsabschnitt 420 weisen jeweils Durchgangsöffnungen 322, 422 auf, die koaxial zu Durchgangsöffnungen 224 des zweiten Turmsegments 220 sind. Durch die Durchgangsöffnungen 322, 224, 422 sind jeweils Gewindebolzen 820 durchgeführt und an der Außenseite mit jeweils einer Mutter 810, die in dem Halter 511 der Aufnahmeplatte 501 angeordnet ist, verschraubt. Die Aufnahmeplatte 501 ist mittels einer Schraubverbindung 520 an dem Verbindungsabschnitt 320 der Koppelplatte 300 befestigt. In dem hier gezeigten Beispiel ist die Aufnahmeplatte 501 im Wesentlichen entsprechend der in Figur 11 gezeigten und hierzu beschriebenen Aufnahmeplatte ausgebildet.

Die Gewindebolzen 820 sind zusätzlich an einer der Innenseite, also der der korrespondierenden Gegenplatte 400 zugewandten Seite, mit jeweils einer Mutter 840 verschraubt. Die korrespondierende Gegenplatte 400 dient hierbei als Auflagefläche für die Mutter 840.

Die Kopplungsvorrichtung 200 umfasst zudem eine Abdeckung 600, die an der von der Koppelplatte 300 abgewandten Außenseite der Aufnahmeplatte 500 angeordnet ist. Die Abdeckung 600 ist mittels Schraubverbindungen 610 an der Aufnahmeplatte 500 befestigt.

Durch in Figur 13 gezeigte Kopplungsvorrichtung 200 kann diese an dem ersten Turmsegment 210 vormontiert werden, indem der Befestigungsabschnitt 310 der Koppelplatte 300 und der korrespondierenden Befestigungsabschnitt 410 der korrespondierenden Gegenplatte 400 an dem ersten Turmsegment 210 befestigt werden. Nach einem Anordnen des ersten Turmsegments 210 und des zweiten Turmsegments aneinander, kann die Montage, insbesondere das Verschrauben des Verbindungsabschnitts 320 und des korrespondierenden Verbindungsabschnitts 420 mit dem zweiten Turmsegment 220 von nur einer Seite, insbesondere von der Innenseite, erfolgen. Dadurch kann eine Montage deutlich vereinfacht und entsprechend ein Montageaufwand reduziert werden.

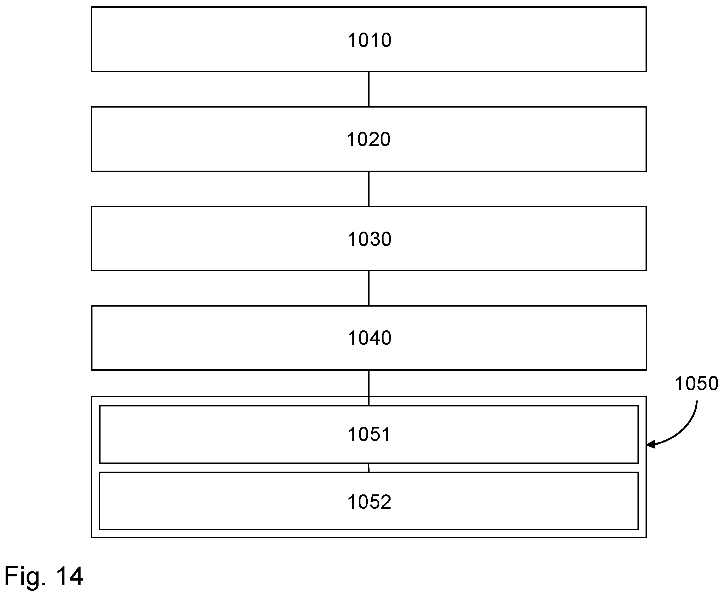

Figur 14 zeigt ein Verfahren zur Montage von aneinander angeordneten Turmsegmenten. Hierbei ist vorgesehen, dass zunächst ein erstes Turmsegment und ein zweites Turmsegment bereitgestellt werden 1010. In einem nächsten Schritt werden zwei, drei oder mehrere Kopplungsvorrichtungen zum Koppeln der Turmsegmente bereitgestellt. Darauffolgend können die zwei, drei oder mehreren Kopplungsvorrichtungen an dem ersten Turmsegment vormontiert werden 1030. Das Vormontieren der Kopplungsvorrichtungen umfasst das Anordnen der ersten Anlagefläche des Befestigungsabschnitts der Koppelplatte an einer Umfangsfläche des ersten Turmsegments am Stoßbereich. Darauffolgend können das erste Turmsegment und das zweite Turmsegment aneinander angeordnet werden 1040. Das Koppeln des ersten Turmsegments und des zweiten Turmsegments 1050 durch Verbinden des Verbindungsabschnitts der Koppelplatte mit dem zweiten Turmsegment erfolgt durch Einführen von Gewindeelementen in jeweils eine Durchgangsöffnung des zweiten Turmsegments von einer einer zweiten Umfangsfläche des zweiten Turmsegments zugewandten Seite und Durchführen der Gewindeelemente durch die Durchgangsöffnungen des zweiten Turmsegments und der Koppelplatte 1051 sowie Vorspannen einer Verbindung der Gewindeelemente mit in den Aufnahmeelementen aufgenommenen Gegenelementen 1053 durch Aufbringen einer Vorspannkraft auf die Verbindung von der der zweiten Umfangsfläche des zweiten Turmsegments zugewandten Seite.

Kopplungsvorrichtung und damit verbundene Turmsegmente ebenso wie ein Turm mit solchen Turmsegmenten haben verschiedene Vorteile. Insbesondere kann eine Montage der Turmsegmente vereinfacht und dadurch der Montageaufwand deutlich reduziert werden. Ferner kann eine Arbeitssicherheit erhöht werden, da die Notwendigkeit bei einem Turmaufbau, einen Fahrkorb an einem oberen Ende der Turmsegmente anzuordnen, um auf die Höhe des Stoßes herab fahren zu können entfällt. Dadurch kann ein segmentierter Turm mit derartigen Kopplungsvorrichtungen insgesamt deutlich kostengünstiger und/oder einfache und/oder schneller hergestellt werden, als mit bekannten Verbindungsvorrichtungen. Mithin kann der Personalaufwand und/oder der Zeitaufwand reduziert und/oder Kosten eingespart werden.

### Bezugszeichenliste

- 100: Windenergieanlage
- 102: Turm
- 104: Gondel
- 106: Rotor
- 108: Rotorblatt
- 110: Spinner
- 200: Kopplungsvorrichtung
- 210: (erstes) Turmsegment
- 212: (erste) Umfangsfläche / Außenumfangsfläche
- 214: Durchgangsöffnung
- 220: (zweites) Turmsegment
- 222: (erste) Umfangsfläche / Außenumfangsfläche
- 224: Durchgangsöffnung
- 300: Koppelplatte
- 310: Befestigungsabschnitt
- 311: erste Anlagefläche
- 312: Durchgangsöffnung
- 320: Verbindungsabschnitt
- 321: zweite Anlagefläche
- 322: Durchgangsöffnung
- 330: äußerer Rand
- 340: Durchgangsöffnung
- 400: korrespondierende Gegenplatte
- 410: korrespondierender Befestigungsabschnitt
- 411: korrespondierende erste Anlagefläche
- 412: Durchgangsöffnung
- 420: korrespondierender Verbindungsabschnitt
- 421: korrespondierende zweite Anlagefläche
- 422: Durchgangsöffnung
- 430: äußerer Rand
- 500, 501: Aufnahmeplatte
- 510: Aufnahmeelement
- 511: Halter
- 512: Steg
- 513: Klemmschenkel
- 514: Hohlraum
- 520: Schraubverbindung
- 540: Durchgangsöffnung
- 541: Befestigungsmittel
- 600: Abdeckung
- 610: Schraubverbindung
- 611: Durchgangsöffnung
- 620: Schienen
- 700: Futterelement
- 810: Gegenelement / Mutter
- 820: Gewindeelement / Gewindebolzen
- 830: Schraube
- 831: Mutter
- 840: Mutter
- 900, 901: Führungsnase
- 1010: Bereitstellen eines ersten Turmsegments und eines zweiten Turmsegments
- 1020: Bereitstellen von zwei, drei oder mehreren Kopplungsvorrichtungen
- 1030: Vormontieren der zwei, drei oder mehreren Kopplungsvorrichtungen an dem ersten Turmsegment
- 1040: Anordnen des ersten Turmsegments und des zweiten Turmsegments aneinander
- 1050: Koppeln des ersten Turmsegments und des zweiten Turmsegments
- 1051: Einführen der Gewindeelemente in die Durchgangsöffnung der korrespondierenden Gegenplatte und Durchführen der Gewindeelemente durch die Durchgangsöffnungen der korrespondierenden Gegenplatte, des zweiten Turmsegments und der Koppelplatte
- 1052: Vorspannen einer Verbindung der Gewindeelemente mit den in den Aufnahmeelementen aufgenommenen Gegenelementen

## Patentansprüche

1. Kopplungsvorrichtung (200) zum Koppeln von aneinander angeordneten Turmsegmenten (210, 220) eines rohrförmigen Turms (102) einer Windenergieanlage (100), umfassend
- eine Koppelplatte (300) zur Anlage an einem Stoßbereich der aneinander angeordneten Turmsegmente (210, 220), umfassend
∘ einen Befestigungsabschnitt (310) mit einer ersten Anlagefläche (311), die ausgebildet ist, um an einer Umfangsfläche (212) eines ersten Turmsegments (210) angeordnet zu werden, und
∘ einen an den Befestigungsabschnitt (310, 410) angrenzenden Verbindungsabschnitt (320) mit einer zweiten Anlagefläche (321), die ausgebildet ist, um an einer Umfangsfläche (222) eines zweiten Turmsegments (220) angeordnet zu werden, und mindestens einer Durchgangsöffnung (322) zum Durchführen eines Gewindeelements,
- eine Aufnahmeplatte (500, 501), die an dem Verbindungsabschnitt (320) an einer der zweiten Anlagefläche (321) gegenüberliegenden Außenfläche der Koppelplatte (300) angeordnet ist, umfassend mindestens ein Aufnahmeelement (510) zur Aufnahme eines mit dem Gewindeelement verschraubbaren Gegenelements, wobei das mindestens eine Aufnahmeelement (510) koaxial zu der Durchgangsöffnung (322) und als eine Verdrehsicherung zum Sperren einer ein Verschrauben mit dem Gewindeelement verhindernden Drehung des Gegenelements ausgebildet ist,
**gekennzeichnet durch**
eine Führungsnase (900), die
- an einem in einer Haupterstreckungsrichtung der Koppelplatte (300) an den Verbindungsabschnitt (320) angrenzenden äußeren Rand (330) der Koppelplatte (300) angeordnet ist und schräg von dem äußeren Rand (330) absteht,
wobei sich vorzugsweise die Führungsnase (900) ausgehend von den äußeren Rand (330, 430) in einem Winkel zwischen 90 ° und 180 ° zu dem Verbindungsabschnitt (320) oder gegebenenfalls zu dem korrespondierenden Verbindungsabschnitt (420) erstreckt.

2. Kopplungsvorrichtung (200) nach dem vorhergehenden Anspruch 1, umfassend eine korrespondierende Gegenplatte (400),
wobei die Koppelplatte (300) zur Anlage an einer ersten Umfangsfläche, insbesondere einer Außenumfangsfläche (212, 222), der aneinander angeordneten Turmsegmente (210, 220) am Stoßbereich ausgebildet ist, wobei
- die erste Anlagefläche (311) des Befestigungsabschnitts (310) der Koppelplatte (300) ausgebildet ist, um an einer ersten Umfangsfläche, insbesondere einer Außenumfangsfläche (212), des ersten Turmsegments (210) angeordnet zu werden, und
- die zweite Anlagefläche (321) des Verbindungsabschnitts (320) der Koppelplatte (300) ausgebildet ist, um an einer ersten Umfangsfläche, insbesondere einer Außenumfangsfläche (222), des zweiten Turmsegments (220) angeordnet zu werden, und
wobei die korrespondierende Gegenplatte (400) zur Anlage an einer zweiten Umfangsfläche, insbesondere einer Innenumfangsfläche, der aneinander angeordneten Turmsegmente (210, 220) am Stoßbereich ausgebildet ist, umfassend
- einen korrespondierenden Befestigungsabschnitt (410) mit einer korrespondierenden ersten Anlagefläche, die ausgebildet ist, um an einer zweiten Umfangsfläche, insbesondere einer Innenumfangsfläche, des ersten Turmsegments (210) angeordnet zu werden, und
- einen an den korrespondierenden Befestigungsabschnitt (410) angrenzenden korrespondierenden Verbindungsabschnitt (440) mit einer korrespondierenden zweiten Anlagefläche (421), die ausgebildet ist, um an einer zweiten Umfangsfläche, insbesondere einer Innenumfangsfläche, des zweiten Turmsegments (220) angeordnet zu werden, und mindestens einer Durchgangsöffnung (422) zum Durchführen eines Gewindeelements.

3. Kopplungsvorrichtung (200) nach mindestens einem der vorhergehenden Ansprüche, wobei das mindestens eine Aufnahmeelement (510) einen Querschnitt aufweist, der ausgebildet ist, um das Gegenelement gegen ein Verdrehen zu sichern, wobei das Aufnahmeelement (510) vorzugsweise
- als eine Ausnehmung in der Aufnahmeplatte (500, 501) ausgebildet ist, oder
- als eine Senkung in der Aufnahmeplatte (500, 501) ausgebildet ist,
wobei vorzugsweise der Querschnitt von einer kreisrunden Form abweicht.

4. Kopplungsvorrichtung (200) nach mindestens einem der vorhergehenden Ansprüche, wobei das mindestens eine Aufnahmeelement (510) als eine Verliersicherung zum Halten des Gegenelements an der Aufnahmeplatte (500, 501) ausgebildet ist.

5. Kopplungsvorrichtung (200) nach mindestens einem der vorhergehenden Ansprüche, wobei die Aufnahmeplatte (500, 501) mindestens eine Durchgangsöffnung zum Durchführen des Gewindeelements und/oder des Gegenelements aufweist,
wobei das mindestens eine Aufnahmeelement (510) einen Halter (511) umfasst, der an einer der Koppelplatte (300) abgewandten Seite der Aufnahmeplatte (500, 501) im Bereich der mindestens einen Durchgangsöffnung angeordnet ist und einen Hohlraum (514) zum Halten des Gegenelements zumindest teilweise begrenzt.

6. Kopplungsvorrichtung (200) nach mindestens dem vorhergehenden Anspruch 5, wobei der Halter (511) miteinander verbundene Stege (512) umfasst, die an der Aufnahmeplatte (500, 501) befestigt sind und den Hohlraum (514) begrenzen,
wobei vorzugsweise der Halter (511) mindestens einen Klemmschenkel (513) umfasst, der mit den Stegen (512) verbunden ist und aus einer Ruheposition, in der der mindestens eine Klemmschenkel (513) einen ersten Querschnitt des Halters (511) begrenzt, in eine Klemmposition zum Einspannen des Gegenelements, in der der mindestens eine Klemmschenkel (513) einen zweiten Querschnitt des Halters (511), der größer ist als der erste Querschnitt, begrenzt, bewegbar ist,
wobei vorzugsweise der mindestens eine Klemmschenkel (513) in der Klemmposition eine Klemmkraft aufweist, die ausgebildet ist, um das Gegenelement verdrehsicher zu halten.

7. Kopplungsvorrichtung (200) nach mindestens einem der vorhergehenden Ansprüche, umfassend eine Abdeckung (600), die an einer von der Koppelplatte (300) abgewandten Seite der Aufnahmeplatte (500, 501) und/oder an der Außenfläche des Verbindungsabschnitts (320) der Koppelplatte (300) angeordnet ist,
wobei die Abdeckung (500, 501) das mindestens eine Aufnahmeelement (510) und/oder die Aufnahmeplatte (500, 501) umgibt.

8. Kopplungsvorrichtung (200) nach mindestens einem der vorhergehenden Ansprüche, umfassend ein Futterelement (700), das ausgebildet ist, um
- an der ersten Anlagefläche (311) des Befestigungsabschnitts (310) und/oder der zweiten Anlagefläche (321) des Verbindungsabschnitts (320) der Koppelplatte (300) angeordnet zu werden oder
- gegebenenfalls an der korrespondierenden ersten Anlagefläche des korrespondierenden Befestigungsabschnitts (410) und/oder der korrespondierenden zweiten Anlagefläche (421) des korrespondierenden Verbindungsabschnitts (420) der korrespondierenden Gegenplatte (400) angeordnet zu werden,
wobei vorzugsweise das Futterelement (700) mindestens eine Durchgangsöffnung zum Durchführen des Gewindeelements umfasst und derart anordenbar ist, dass die mindestens eine Durchgangsöffnung des Futterelements (700) und die mindestens eine Durchgangsöffnung (322, 422) des Verbindungsabschnitts (320) und/oder gegebenenfalls die mindestens eine Durchgangsöffnung (422) des korrespondierenden Verbindungsabschnitts (440) koaxial zueinander sind.

9. Kopplungsvorrichtung (200) nach mindestens einem der vorhergehenden Ansprüche, umfassend das Gegenelement (810), wobei vorzugsweise das Gegenelement (810) an dem Aufnahmeelement (510) vormontiert ist,
wobei vorzugsweise das Gegenelement (810) als eine Mutter ausgebildet ist, vorzugsweise umfassend eine Unterlegscheibe mit einer Auflagefläche für die Mutter.

10. Kopplungsvorrichtung (200) nach mindestens dem vorhergehenden Anspruch 2, umfassend eine Führungsnase (900, 901), die
- gegebenenfalls an einem in einer Haupterstreckungsrichtung der korrespondierenden Gegenplatte (400) an den korrespondierenden Verbindungsabschnitt (420) angrenzenden äußeren Rand (430) der korrespondierenden Gegenplatte (400) angeordnet ist und schräg von dem äußeren Rand (430) absteht,
wobei sich vorzugsweise die Führungsnase (900, 901) ausgehend von den äußeren Rand (330, 430) in einem Winkel zwischen 90 ° und 180 ° zu dem Verbindungsabschnitt (320) oder gegebenenfalls zu dem korrespondierenden Verbindungsabschnitt (420) erstreckt.

11. Turmsegment (210) für einen rohrförmigen Turm (102) einer Windenergieanlage (100), umfassend zwei, drei oder mehrere Kopplungsvorrichtungen (200) nach mindestens einem der vorhergehenden Ansprüche,
wobei die erste Anlagefläche (311) des Befestigungsabschnitts (310) der Koppelplatte (300) an der Umfangsfläche (212) des Turmsegments (210) am Stoßbereich angeordnet ist,
wobei jeweils der Verbindungsabschnitt (320) der Koppelplatte (300) über einen stoßseitigen Rand des Turmsegments (210) hervorsteht.

12. Teil eines Turmes (102) einer Windenergieanlage (100), umfassend ein erstes Turmsegment (210), insbesondere nach dem vorhergehenden Anspruch, und ein zweites Turmsegment (220), die über zwei, drei oder mehreren Kopplungsvorrichtungen (200) nach mindestens einem der vorhergehenden Ansprüche 1 bis 10 miteinander verbunden sind,
wobei jeweils die erste Anlagefläche (311) des Befestigungsabschnitts (310) der Koppelplatte (300) an der Umfangsfläche (212) des ersten Turmsegments (210) am Stoßbereich angeordnet ist, und
wobei jeweils die zweite Anlagefläche (321) des Verbindungsabschnitts (320) der Koppelplatte (300) an der Umfangsfläche (222) des zweiten Turmsegments (220) am Stoßbereich angeordnet ist,
wobei das zweite Turmsegment (220) mindestens eine Durchgangsöffnung (224) aufweist, die koaxial zu der mindestens einen Durchgangsöffnung (322) des Verbindungsabschnitts (320) der Koppelplatte (300) ist,
wobei jeweils der Verbindungsabschnitt (320) der Koppelplatte (300) mit dem zweiten Turmsegment (220) über ein in den Durchgangsöffnungen (322) angeordnetes Gewindeelement (820), das mit einem in dem Aufnahmeelement aufgenommenen Gegenelement (810) verschraubt ist, verbunden ist.

13. Turm (102) für eine Windenergieanlage (100), umfassend mindestens einen Teil eines Turms (102) nach dem vorhergehenden Anspruch 12 und/oder mindestens ein Turmsegment (210) nach dem vorhergehenden Anspruch 11 und/oder mindestens eine Kopplungsvorrichtung (200) nach mindestens einem der vorhergehenden Ansprüche 1 bis 10.

14. Windenergieanlage (100), umfassend einen Turm (102) nach mindestens dem vorhergehenden Anspruch 13 und/oder mindestens einen Teil eines Turms (102) nach dem vorhergehenden Anspruch 12 und/oder mindestens ein Turmsegment (210) nach dem vorhergehenden Anspruch 11 und/oder mindestens eine Kopplungsvorrichtung (200) nach mindestens einem der vorhergehenden Ansprüche 1 bis 10.

15. Verfahren zur Montage von aneinander angeordneten Turmsegmenten (101) eines rohrförmigen Turms einer Windenergieanlage, umfassend die Schritte:
- Bereitstellen eines ersten Turmsegments, insbesondere nach dem vorhergehenden Anspruch 11, und eines zweiten Turmsegments (1010),
- Bereitstellen von zwei, drei oder mehreren Kopplungsvorrichtungen (1020) nach mindestens einem der vorhergehenden Ansprüche 1 bis 10,
- Vormontieren der zwei, drei oder mehreren Kopplungsvorrichtungen an dem ersten Turmsegment (1030) durch Anordnen der ersten Anlagefläche des Befestigungsabschnitts der Koppelplatte an einer Umfangsfläche des ersten Turmsegments am Stoßbereich,
- Anordnen des ersten Turmsegments und des zweiten Turmsegments aneinander (1040) und
- Koppeln des ersten Turmsegments und des zweiten Turmsegments (1050) durch Verbinden des Verbindungsabschnitts der Koppelplatte mit dem zweiten Turmsegment durch
∘ Einführen von Gewindeelementen in jeweils eine Durchgangsöffnung des zweiten Turmsegments von einer einer zweiten Umfangsfläche des zweiten Turmsegments zugewandten Seite und Durchführen der Gewindeelemente durch die Durchgangsöffnungen des zweiten Turmsegments und der Koppelplatte (1051) und
∘ Vorspannen einer Verbindung der Gewindeelemente mit in den Aufnahmeelementen aufgenommenen Gegenelementen (1052) durch Aufbringen einer Vorspannkraft auf die Verbindung von der der zweiten Umfangsfläche des zweiten Turmsegments zugewandten Seite.

## Claims

1. Coupling device (200) for coupling tower segments (210, 220), which are arranged on one another, of a tubular tower (102) of a wind power installation (100), comprising
- a coupling plate (300) for contact against an abutting region of the tower segments (210, 220) arranged on one another, comprising
o a fastening portion (310) having a first contact surface (311) which is designed to be arranged on a circumferential surface (212) of a first tower segment (210), and
∘ a connecting portion (320) which is adjacent to the fastening portion (310, 410) and has a second contact surface (321) which is designed to be arranged on a circumferential surface (222) of a second tower segment (220) and has at least one through-opening (322) for the passage of a threaded element,
- a receiving plate (500, 501) which is arranged on the connecting portion (320), on an outer surface of the coupling plate (300) opposite the second contact surface (321), comprising at least one receiving element (510) for receiving a counter element which can be bolted to the threaded element,
wherein the at least one receiving element (510) is formed coaxially with respect to the through-opening (322) and as an anti-twist protection for blocking the counter element from rotating and preventing bolting to the threaded element,
**characterized by**
a guide lug (900) which
- is arranged on an outer edge (330) of the coupling plate (300), which outer edge is adjacent to the connecting portion (320) in a main direction of extent of the coupling plate (300), and protrudes obliquely from the outer edge (330),
wherein preferably the guide lug (900) extends from the outer edge (330, 430) at an angle of between 90° and 180° with respect to the connecting portion (320) or optionally with respect to the corresponding connecting portion (420).

2. Coupling device (200) according to the preceding Claim 1, comprising a corresponding counterplate (400),
wherein the coupling plate (300) is designed for contact against a first circumferential surface, in particular an outer circumferential surface (212, 222), of the tower segments (210, 220), which are arranged on one another, at the abutting region, wherein
- the first contact surface (311) of the fastening portion (310) of the coupling plate (300) is designed to be arranged on a first circumferential surface, in particular an outer circumferential surface (212), of the first tower segment (210), and
- the second contact surface (321) of the connecting portion (320) of the coupling plate (300) is designed to be arranged on a first circumferential surface, in particular an outer circumferential surface (222), of the second tower segment (220), and
wherein the corresponding counterplate (400) is designed for contact against a second circumferential surface, in particular an inner circumferential surface, of the tower segments (210, 220), which are arranged on one another, at the abutting region, comprising
- a corresponding fastening portion (410) having a corresponding first contact surface which is designed to be arranged on a second circumferential surface, in particular an inner circumferential surface, of the first tower segment (210), and
- a corresponding connecting portion (440) which is adjacent to the corresponding fastening portion (410) has a corresponding second contact surface (421) which is designed to be arranged on a second circumferential surface, in particular an inner circumferential surface, of the second tower segment (220) and has at least one through-opening (422) for the passage of a threaded element.

3. Coupling device (200) according to at least either of the preceding claims, wherein the at least one receiving element (510) has a cross section which is designed to secure the counter element against twisting, wherein the receiving element (510) preferably
- is designed as a recess in the receiving plate (500, 501), or
- is designed as a depression in the receiving plate (500, 501),
wherein preferably the cross section differs from a circular shape.

4. Coupling device (200) according to at least one of the preceding claims, wherein the at least one receiving element (510) is designed as a captive-securing means for holding the counter element on the receiving plate (500, 501).

5. Coupling device (200) according to at least one of the preceding claims, wherein the receiving plate (500, 501) has at least one through-opening for the passage of the threaded element and/or of the counter element,
wherein the at least one receiving element (510) comprises a holder (511) which, on a side of the receiving plate (500, 501) facing away from the coupling plate (300), is arranged in the region of the at least one through-opening and at least partially delimits a cavity (514) for holding the counter element.

6. Coupling device (200) according to at least the preceding Claim 5, wherein the holder (511) comprises interconnected webs (512) which are fastened to the receiving plate (500, 501) and delimit the cavity (514),
wherein preferably the holder (511) comprises at least one clamping limb (513) which is connected to the webs (512) and is movable from an inoperative position, in which the at least one clamping limb (513) delimits a first cross section of the holder (511), into a clamping position for clamping the counter element, in which clamping position the at least one clamping limb (513) delimits a second cross section of the holder (511) that is larger than the first cross section,
wherein preferably the at least one clamping limb (513) in the clamping position has a clamping force which is designed to hold the counter element captively.

7. Coupling device (200) according to at least one of the preceding claims, comprising a covering (600) which is arranged on a side of the receiving plate (500, 501) facing away from the coupling plate (300) and/or on the outer surface of the connecting portion (320) of the coupling plate (300),
wherein the covering (500, 501) surrounds the at least one receiving element (510) and/or the receiving plate (500, 501).

8. Coupling device (200) according to at least one of the preceding claims, comprising a lining element (700) which is designed to
- be arranged on the first contact surface (311) of the fastening portion (310) and/or the second contact surface (321) of the connecting portion (320) of the coupling plate (300), or
- be arranged optionally on the corresponding first contact surface of the corresponding fastening portion (410) and/or the corresponding second contact surface (421) of the corresponding connecting portion (420) of the corresponding counterplate (400),
wherein preferably the lining element (700) comprises at least one through-opening for the passage of the threaded element and can be arranged in such a manner that the at least one through-opening of the lining element (700) and the at least one through-opening (322, 422) of the connecting portion (320) and/or optionally the at least one through-opening (422) of the corresponding connecting portion (440) are coaxial with respect to one another.

9. Coupling device (200) according to at least one of the preceding claims, comprising the counter element (810), wherein preferably the counter element (810) is preassembled on the receiving element (510),
wherein preferably the counter element (810) is designed as a nut, preferably comprising a washer with a supporting surface for the nut.

10. Coupling device (200) according to at least one of the preceding claim 2, comprising a guide lug (900, 901) which
- is optionally arranged on an outer edge (430) of the corresponding counterplate (400), which outer edge is adjacent to the corresponding connecting portion (420) in a main direction of extent of the corresponding counterplate (400), and protrudes obliquely from the outer edge (430),
wherein preferably the guide lug (900, 901) extends from the outer edge (330, 430) at an angle of between 90° and 180° with respect to the connecting portion (320) or optionally with respect to the corresponding connecting portion (420).

11. Tower segment (210) for a tubular tower (102) of a wind power installation (100), comprising two, three or more coupling devices (200) according to at least one of the preceding claims,
wherein the first contact surface (311) of the fastening portion (310) of the coupling plate (300) is arranged on the circumferential surface (212) of the tower segment (210) at the abutting region,
wherein the connecting portion (320) of the coupling plate (300) in each case protrudes over a joint-side edge of the tower segment (210).

12. Part of a tower (102) of a wind power installation (100), comprising a first tower segment (210), in particular according to the preceding claim, and a second tower segment (220), which tower segments are connected to each other via two, three or more coupling devices (200) according to at least one of the preceding Claims 1 to 10, wherein in each case the first contact surface (311) of the fastening portion (310) of the coupling plate (300) is arranged on the circumferential surface (212) of the first tower segment (210) at the abutting region, and
wherein in each case the second contact surface (321) of the connecting portion (320) of the coupling plate (300) is arranged on the circumferential surface (222) of the second tower segment (220) at the abutting region,
wherein the second tower segment (220) has at least one through-opening (224) which is coaxial with respect to the at least one through-opening (322) of the connecting portion (320) of the coupling plate (300),
wherein in each case the connecting portion (320) of the coupling plate (300) is connected to the second tower segment (220) via a threaded element (820) which is arranged in the through-openings (322) and is bolted to a counter element (810) received in the receiving element.

13. Tower (102) for a wind power installation (100), comprising at least one part of a tower (102) according to the preceding Claim 12 and/or at least one tower segment (210) according to the preceding Claim 11 and/or at least one coupling device (200) according to at least one of the preceding Claims 1 to 10.

14. Wind power installation (100), comprising a tower (102) according to at least the preceding Claim 13 and/or at least one part of a tower (102) according to the preceding Claim 12 and/or at least one tower segment (210) according to the preceding Claim 11 and/or at least one coupling device (200) according to at least one of the preceding Claims 1 to 10.

15. Method for installing tower segments (101), which are arranged on one another, of a tubular tower of a wind power installation, comprising the steps of:
- providing a first tower segment, in particular according to the preceding Claim 11, and a second tower segment (1010),
- providing two, three or more coupling devices (1020) according to at least one of the preceding Claims 1 to 10,
- preassembling the two, three or more coupling devices on the first tower segment (1030) by arranging the first contact surface of the fastening portion of the coupling plate on a circumferential surface of the first tower segment at the abutting region,
- arranging the first tower segment and the second tower segment on one another (1040) and
- coupling the first tower segment and the second tower segment (1050) by connecting the connecting portion of the coupling plate to the second tower segment by
∘ inserting threaded elements into a respective through-opening of the second tower segment from a side facing a second circumferential surface of the second tower segment and passing the threaded elements through the through-openings of the second tower segment and of the coupling plate (1051), and
∘ prestressing a connection of the threaded elements to counter elements (1052) received in the receiving elements by applying a prestressing force to the connection from the side facing the second circumferential surface of the second tower segment.

## Revendications

1. Dispositif de couplage (200) pour coupler des segments de tour (210, 220) disposés les uns sur les autres d'une tour tubulaire (102) d'une éolienne (100), comprenant
- une plaque de couplage (300) destinée à venir en appui sur une zone de jonction des segments de tour (210, 220) disposés les uns sur les autres, comprenant
∘ une section de fixation (310) avec une première surface d'appui (311) qui est réalisée pour être disposée sur une surface périphérique (212) d'un premier segment de tour (210), et
∘ une section de liaison (320) jouxtant la section de fixation (310, 410) avec une deuxième surface d'appui (321) qui est réalisée pour être disposée sur une surface périphérique (222) d'un deuxième segment de tour (220), et au moins une ouverture de passage (322) pour guider au travers un élément fileté,
- une plaque de réception (500, 501), qui est disposée sur la section de liaison (320) sur une surface extérieure de la plaque de couplage (300) opposée à la deuxième surface d'appui (321), comprenant au moins un élément de réception (510) destiné à recevoir un contre-élément pouvant être vissé avec l'élément fileté, dans lequel l'au moins un élément de réception (510) est réalisé coaxialement à l'ouverture de passage (322) et est réalisé comme une sécurité antirotation pour bloquer une rotation du contre-élément empêchant un vissage avec l'élément fileté,
**caractérisé par** :
un ergot de guidage (900), qui
- est disposé sur un bord extérieur (330) de la plaque de couplage (300) jouxtant la section de liaison (320) dans une direction d'extension principale de la plaque de couplage (300) et qui dépasse obliquement du bord extérieur (330),
dans lequel l'ergot de guidage (900) s'étend de préférence en partant du bord extérieur (330, 430) selon un angle compris entre 90° et 180° par rapport à la section de liaison (320) ou, le cas échéant, à la section de liaison (420) correspondante.

2. Dispositif de couplage (200) selon la revendication précédente 1, comprenant une contre-plaque (400) correspondante,
dans lequel la plaque de couplage (300) est réalisée pour venir en appui sur une première surface périphérique, en particulier une surface périphérique extérieure (212, 222), des segments de tour (210, 220) disposés les uns sur les autres sur la zone de jonction, dans lequel
- la première surface d'appui (311) de la section de fixation (310) de la plaque de couplage (300) est réalisée pour être disposée sur une première surface périphérique, en particulier une surface périphérique extérieure (212), du premier segment de tour (210), et
- la deuxième surface d'appui (321) de la section de liaison (320) de la plaque de couplage (300) est réalisée pour être disposée sur une première surface périphérique, en particulier une surface périphérique extérieure (222), du deuxième segment de tour (220), et
dans lequel la contre-plaque (400) correspondante est réalisée pour venir en appui sur une deuxième surface périphérique, en particulier une surface périphérique intérieure, des segments de tour (210, 220) disposés les uns sur les autres dans la zone de jonction, comprenant
- une section de fixation (410) correspondante avec une première surface d'appui correspondante qui est réalisée pour être disposée sur une deuxième surface périphérique, en particulier une surface périphérique intérieure, du premier segment de tour (210), et
- une section de liaison (440) correspondante jouxtant la section de fixation (410) correspondante avec une deuxième surface d'appui (421) correspondante, qui est réalisée pour être disposée sur une deuxième surface périphérique, en particulier une surface périphérique intérieure, du deuxième segment de tour (220), et au moins une ouverture de passage (422) pour guider au travers un élément fileté.

3. Dispositif de couplage (200) selon au moins l'une des revendications précédentes, dans lequel l'au moins un élément de réception (510) présente une section transversale qui est réalisée pour empêcher le contre-élément de tourner, dans lequel l'élément de réception (510) est de préférence
- réalisé comme un évidement dans la plaque de réception (500, 501), ou
- réalisé comme un creux dans la plaque de réception (500, 501),
dans lequel, de préférence, la section transversale diffère d'une forme ronde circulaire.

4. Dispositif de couplage (200) selon au moins l'une des revendications précédentes, dans lequel l'au moins un élément de réception (510) est réalisé comme un dispositif anti-perte pour maintenir le contre-élément sur la plaque de réception (500, 501).

5. Dispositif de couplage (200) selon au moins l'une des revendications précédentes, dans lequel la plaque de réception (500, 501) présente au moins une ouverture de passage pour guider au travers l'élément fileté et/ou le contre-élément,
dans lequel l'au moins un élément de réception (510) comprend un support (511) qui est disposé sur un côté, opposé à la plaque de couplage (300), de la plaque de réception (500, 501) dans la zone de l'au moins une ouverture de passage et qui délimite au moins en partie une cavité (514) pour maintenir le contre-élément.

6. Dispositif de couplage (200) selon au moins la revendication précédente 5, dans lequel le support (511) comprend des nervures (512) reliées entre elles, qui sont fixées sur la plaque de réception (500, 501) et délimitent la cavité (514),
dans lequel de préférence le support (511) comprend au moins une patte de serrage (513) qui est reliée aux nervures (512) et qui peut être déplacée d'une position de repos, dans laquelle l'au moins une patte de serrage (513) délimite une première section transversale du support (511), dans une position de serrage pour enserrer le contre-élément, dans laquelle l'au moins une patte de serrage (513) délimite une deuxième section transversale du support (511), qui est plus grande que la première section transversale,
dans lequel de préférence l'au moins une patte de serrage (513) présente, dans la position de serrage, une force de serrage qui est réalisée pour maintenir le contre-élément bloqué en rotation.

7. Dispositif de couplage (200) selon au moins l'une des revendications précédentes, comprenant un capot (600) qui est disposé sur un côté de la plaque de réception (500, 501) opposé à la plaque de couplage (300) et/ou sur la surface extérieure de la section de liaison (320) de la plaque de couplage (300),
dans lequel le capot (500, 501) entoure l'au moins un élément de réception (510) et/ou la plaque de réception (500, 501).

8. Dispositif de couplage (200) selon au moins l'une des revendications précédentes, comprenant un élément de garniture (700) qui est réalisé pour
- être disposé sur la première surface d'appui (311) de la section de fixation (310) et/ou la deuxième surface d'appui (321) de la section de liaison (320) de la plaque de couplage (300) ou
- éventuellement être disposé sur la première surface d'appui correspondante de la section de fixation (410) correspondante et/ou la deuxième surface d'appui (421) correspondante de la section de liaison (420) correspondante de la contre-plaque (400) correspondante,
dans lequel de préférence l'élément de garniture (700) comprend au moins une ouverture de passage pour guider au travers l'élément fileté et peut être disposé de telle manière que l'au moins une ouverture de passage de l'élément de garniture (700) et l'au moins une ouverture de passage (322, 422) de la section de liaison (320) et/ou le cas échéant l'au moins une ouverture de passage (422) de la section de liaison (440) correspondante sont coaxiales l'une par rapport à l'autre.

9. Dispositif de couplage (200) selon au moins l'une des revendications précédentes, comprenant le contre-élément (810), dans lequel de préférence le contre-élément (810) est prémonté sur l'élément de réception (510),
dans lequel de préférence le contre-élément (810) est réalisé comme un écrou, comprenant de préférence une rondelle avec une surface de soutien pour l'écrou.

10. Dispositif de couplage (200) selon au moins la revendication précédente 2, comprenant un ergot de guidage (900, 901), qui
- est disposé, le cas échéant, sur un bord extérieur (430) de la contre-plaque (400) correspondante jouxtant la section de liaison (420) correspondante dans une direction d'extension principale de la contre-plaque (400) correspondante et dépasse obliquement du bord extérieur (430),
dans lequel de préférence l'ergot de guidage (900, 901) s'étend en partant du bord extérieur (330, 430) selon un angle compris entre 90° et 180° par rapport à la section de liaison (320) ou, le cas échéant, à la section de liaison (420) correspondante.

11. Segment de tour (210) pour une tour tubulaire (102) d'une éolienne (100), comprenant deux, trois ou plus dispositifs de couplage (200) selon au moins l'une des revendications précédentes,
dans lequel la première surface d'appui (311) de la section de fixation (310) de la plaque de couplage (300) est disposée sur la surface périphérique (212) du segment de tour (210) sur la zone de jonction,
dans lequel la section de liaison (320) de la plaque de couplage (300) fait saillie respectivement d'un bord côté jonction du segment de tour (210).

12. Partie d'une tour (102) d'une éolienne (100), comprenant un premier segment de tour (210), en particulier selon la revendication précédente, et un deuxième segment de tour (220), qui sont reliés l'un à l'autre par deux, trois ou plus dispositifs de couplage (200) selon au moins l'une des revendications précédentes 1 à 10,
dans laquelle la première surface d'appui (311) de la section de fixation (310) de la plaque de couplage (300) est disposée respectivement sur la surface périphérique (212) du premier segment de tour (210) sur la zone de jonction, et
dans laquelle la deuxième surface d'appui (321) de la section de liaison (320) de la plaque de couplage (300) est disposée respectivement sur la surface périphérique (222) du deuxième segment de tour (220) sur la zone de jonction,
dans laquelle le deuxième segment de tour (220) présente au moins une ouverture de passage (224) qui est coaxiale à l'au moins une ouverture de passage (322) de la section de liaison (320) de la plaque de couplage (300),
dans laquelle la section de liaison (320) de la plaque de couplage (300) est respectivement reliée au deuxième segment de tour (220) par l'intermédiaire d'un élément fileté (820) disposé dans les ouvertures de passage (322), qui est vissé à un contre-élément (810) reçu dans l'élément de réception.

13. Tour (102) pour une éolienne (100), comprenant au moins une partie d'une tour (102) selon la revendication précédente 12 et/ou au moins un segment de tour (210) selon la revendication précédente 11 et/ou au moins un dispositif de couplage (200) selon au moins l'une des revendications précédentes 1 à 10.

14. Éolienne (100), comprenant une tour (102) selon au moins la revendication précédente 13 et/ou au moins une partie d'une tour (102) selon la revendication précédente 12 et/ou au moins un segment de tour (210) selon la revendication précédente 11 et/ou au moins un dispositif de couplage (200) selon au moins l'une des revendications précédentes 1 à 10.

15. Procédé de montage de segments de tour (101) disposés les uns sur les autres d'une tour tubulaire d'une éolienne, comprenant les étapes :
- de mise à disposition d'un premier segment de tour, en particulier selon la revendication précédente 11, et d'un deuxième segment de tour (1010),
- de mise à disposition de deux, trois ou plus dispositifs de couplage (1020) selon au moins l'une des revendications précédentes 1 à 10,
- de prémontage des deux, trois ou plus dispositifs de couplage sur le premier segment de tour (1030) en disposant la première surface d'appui de la section de fixation de la plaque de couplage sur une surface périphérique du premier segment de tour sur la zone de jonction,
- de disposition du premier segment de tour et du deuxième segment de tour (1040) l'un à l'autre, et
- de couplage du premier segment de tour et du deuxième segment de tour (1050) en reliant la section de liaison de la plaque de couplage au deuxième segment de tour par
∘ l'insertion d'éléments filetés dans respectivement une ouverture de passage du deuxième segment de tour depuis un côté tourné vers une deuxième surface périphérique du deuxième segment de tour et le guidage des éléments filetés à travers les ouvertures de passage du deuxième segment de tour et de la plaque de couplage (1051) et
∘ la précontrainte d'une liaison des éléments filetés à des contre-éléments (1052) logés dans les éléments de réception par application d'une force de précontrainte sur la liaison depuis le côté tourné vers la deuxième surface périphérique du deuxième segment de tour.
